(19) Europäisches Patentamt
European Patent Office
Office européen des brevets

(11) **EP 3 942 585 B1**

(12) **FASCICULE DE BREVET EUROPEEN**

(45) Date de publication et mention
de la délivrance du brevet:
**07.06.2023 Bulletin 2023/23**

(21) Numéro de dépôt: **20726508.3**

(22) Date de dépôt: **16.03.2020**

(51) Classification Internationale des Brevets (IPC):
**H01H 9/54** *(2006.01)*      **H01H 33/59** *(2006.01)*

(52) Classification Coopérative des Brevets (CPC):
**H01H 33/596; H01H 9/542; H01H 9/547;**
H01H 2009/543; H01H 2009/544

(86) Numéro de dépôt international:
**PCT/FR2020/050552**

(87) Numéro de publication internationale:
**WO 2020/193906 (01.10.2020 Gazette 2020/40)**

(54) **DISPOSITIF DE COUPURE DE COURANT POUR COURANT CONTINU HAUTE TENSION AVEC RÉSONATEUR ET COMMUTATION**

STROMABSCHALTVORRICHTUNG FÜR HOCHSPANNUNGSGLEICHSTROM MIT RESONATOR UND SCHALTUNG

CURRENT CUT-OFF DEVICE FOR HIGH-VOLTAGE DIRECT CURRENT WITH RESONATOR AND SWITCHING

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.03.2019 FR 1903008**

(43) Date de publication de la demande:
**26.01.2022 Bulletin 2022/04**

(73) Titulaire: **Supergrid Institute**
**69100 Villeurbanne (FR)**

(72) Inventeurs:
• **GRIESHABER, Wolfgang**
**69006 LYON (FR)**
• **YANG, Yang**
**69100 VILLEURBANNE (FR)**
• **LEGENDRE, Pierre**
**69100 VILLEURBANNE (FR)**

(74) Mandataire: **Cabinet Beau de Loménie**
**51 avenue Jean Jaurès**
**BP 7073**
**69301 Lyon Cedex 07 (FR)**

(56) Documents cités:
EP-A1- 3 306 635      EP-A1- 3 321 948
WO-A1-2013/092873

**Description**

**Domaine Technique**

L'invention concerne le domaine des réseaux de transmission et / ou de distribution de courant électrique continu sous haute tension, généralement désignés sous l'acronyme HVDC. L'invention porte en particulier sur les dispositifs de coupure de courant de défaut destinés à de tels réseaux.

Les réseaux HVDC sont notamment envisagés comme une solution à l'interconnexion de sites de production d'électricité disparates ou non synchrones. Les réseaux HVDC sont notamment envisagés pour la transmission et la distribution d'énergie produite par des fermes éoliennes offshore plutôt que des technologies de courant alternatif, du fait de pertes en ligne inférieures et d'absence d'incidence des capacités parasites du réseau sur de longues distances. De tels réseaux ont typiquement des niveaux de tension de l'ordre de 100 kV et plus.

Dans le présent texte, pour un dispositif dans le lequel circule un courant continu, on considère comme dispositif à haute tension soit un dispositif à « haute tension A », dans lequel la tension de service nominale est supérieure à 1500 V en courant continu, mais inférieure ou égale à 75 000 V (75kV), soit un dispositif à « haute tension B » lorsque la tension de service nominale est supérieure à 75 000 V (75kV) en courant continu. Ainsi, le domaine de la haute tension inclut le domaine de la « haute tension A » et celui de la « haute tension B ».

La coupure du courant continu dans de tels réseaux est un enjeu crucial conditionnant directement la faisabilité et le développement de tels réseaux.

On connaît des appareils de coupure de type disjoncteur mécanique pour réaliser la coupure de courant alternatif, c'est à dire que la coupure du courant est obtenue uniquement par l'ouverture d'un élément interrupteur mécanique. Un tel élément interrupteur mécanique comporte deux pièces conductrices faisant contact qui sont en contact mécanique et électrique lorsque l'élément interrupteur est fermé et qui se séparent mécaniquement lorsque l'élément interrupteur est ouvert. Ces disjoncteurs mécaniques présentent plusieurs inconvénients lorsqu'ils sont traversés par des courants importants.

En présence d'un courant et / ou d'une tension importante, la séparation mécanique peut se traduire par l'établissement d'un arc électrique entre les deux pièces conductrices, du fait des énergies importantes accumulées dans le réseau que l'appareil protège. Tant que l'arc électrique reste établi au travers de la séparation mécanique, l'appareil de coupure ne réalise pas la coupure électrique puisqu'un courant continue de circuler au travers de l'appareil par la présence de l'arc. La coupure électrique, au sens de l'interruption effective de la circulation du courant électrique, est parfois particulièrement difficile à réaliser dans un contexte de courant continu et de tension élevée, ces conditions tendant à entretenir l'arc électrique. Par ailleurs, cet arc électrique dégrade, d'une part par érosion les deux pièces conductrices faisant contact, et d'autre part le milieu environnant par ionisation. De plus, le courant met un certain temps à s'interrompre du fait de cette ionisation. Cela nécessite des opérations de maintenance de l'appareil de coupure qui sont contraignantes et coûteuses.

Les courants de défauts en réseau HVDC sont particulièrement violents et destructeurs. Lorsqu'un défaut générant un fort courant apparaît, il est nécessaire de le couper rapidement ou éventuellement de le limiter en attendant que la coupure soit possible. De plus, la coupure des courants HVDC est plus complexe à réaliser que celle des courants alternatifs (AC). En effet, lors de la coupure d'un courant alternatif, on profite d'un passage par zéro du courant pour réaliser la coupure, ce qui n'est pas le cas avec un courant continu, notamment HVDC.

**Technique antérieure**

Diverses solutions ont été proposées pour faciliter la coupure de courant dans une ligne HVDC. On peut par exemple citer les documents DE-10.2011.083514, WO-2015/078525, WO-2015/166600, US-2017/0178844, ou DE-2136865, WO-2015/185096, US4442469, US3758790, WO-2013092873, EP-3.321.948, EP-3.306.635.

Certaines solutions font appel à de nombreux composants actifs de commutation à semi-conducteurs, principalement des thyristors et des IGBT. Or, ces composants ont un rapport prix / puissance élevé. Une utilisation excessive de tels commutateurs à semi-conducteurs augmente le coût de la solution.

Le document EP-3.161.846 décrit un dispositif de coupure de courant pour courant continu haute tension comportant un interrupteur primaire et un circuit d'oscillation ayant un résonateur, de type LC en série, et qui est agencé électriquement en parallèle de l'interrupteur primaire. Ce circuit d'oscillation est alimenté par un convertisseur à commutateurs commandés. Ce circuit d'oscillation est susceptible de générer un courant d'oscillation dont l'intensité de pic est croissante au fur et à mesure des oscillations, de manière à créer, lorsque l'intensité de pic du courant d'oscillation atteint une valeur supérieure au courant initial dans l'interrupteur primaire, un passage par zéro du courant dans l'interrupteur primaire. Le convertisseur à IGBT qui est mis en oeuvre est relativement complexe, et nécessite un parfait contrôle des instants de commutation des commutateurs commandés. Le document WO-2017/116296 décrit des variantes de réalisation du même concept, affectés des mêmes problèmes.

Par ailleurs, dans un domaine distinct, celui de la basse tension, pour une tension nominale inférieure ou égale à 1kV, il a été proposé des systèmes comportant un résonateur de type LC et un organe de commutation pour générer un courant d'oscillation dont l'intensité de pic est croissante au fur et à mesure des oscillations. Un tel système est décrit par exemple dans « A novel low voltage hybrid DC switch using resonant current injection », Zichi Zhang et al., International Conférence on Components and Systems for DC Grids, Mars 2017, et dans « Self-powered supply and control system for hybrid semiconductor DC switch », Mehanathan Pathmanathan et al., EPE'18 ECCE Europe, ISBN: 9789075815290 - IEEE catalog number: CFP18850-USB. Le document EP-3.059.827 décrit un système comparable, pour des applications à basse ou moyenne tension.

Le document EP-0.660.352 décrit un dispositif de coupure de courant pour courant continu haute tension. Ce dispositif comprend un interrupteur primaire, mécanique, et un interrupteur secondaire, mécanique, interposés successivement dans la ligne principale entre le point primaire et le point secondaire mais de part et d'autre d'un point intermédiaire de la ligne principale, les deux interrupteurs mécaniques étant commandés chacun entre un état ouvert et un état fermé. Le dispositif comprend un parasurtenseur primaire agencé en parallèle de l'interrupteur primaire entre le point primaire et le point intermédiaire. Ce dispositif comporte par ailleurs un circuit d'oscillation ayant un résonateur, qui est ici de type LC en série, et qui est agencé électriquement en parallèle de l'ensemble formé par l'interrupteur primaire et l'interrupteur secondaire. Le circuit d'oscillation comporte par ailleurs un interrupteur d'excitation, sous la forme d'un IGBT en parallèle de l'interrupteur primaire qui est ouvert et fermé à une fréquence d'oscillation. Ce circuit d'oscillation est susceptible de générer un courant d'oscillation dont l'intensité de pic est croissante au fur et à mesure des oscillations, de manière à créer, lorsque l'intensité de pic du courant d'oscillation atteint une valeur supérieure au courant initial dans la ligne principale, un passage par zéro du courant dans la ligne principale, donc au travers de deux interrupteurs. Ce dispositif comporte aussi un parasurtenseur principal, agencé électriquement en parallèle du résonateur de type LC du circuit d'oscillation. Dans ce dispositif, l'interrupteur d'excitation doit être dimensionné pour supporter le double du courant de défaut, ce qui en accroît considérablement le prix. De plus, ce dispositif n'est capable d'arrêter un courant de défaut que dans un seul sens au travers de la ligne principale. Enfin, les pertes par commutation dans l'interrupteur d'excitation sont très importantes.

En résumé, par rapport à l'art antérieur, l'invention vise à proposer des solutions qui ont une capacité d'interruption de courant pouvant couper des courants de l'ordre de plusieurs dizaines de kiloampères, par exemple de 20 kiloampères, avec une taille et un coût raisonnables.

## Exposé de l'invention

L'invention propose donc un dispositif de coupure de courant pour courant électrique continu haute tension, du type comportant :

- une ligne principale entre un point primaire et un point secondaire, avec un point intermédiaire dans la ligne principale entre le point primaire et le point secondaire ;
- un organe primaire de diversion interposé dans la ligne principale entre le point primaire et le point intermédiaire, l'organe de diversion présentant au moins un état passant, dans lequel il conduit un courant électrique entre le point primaire et le point intermédiaire, et au moins un état de diversion, dans lequel il s'oppose au moins en partie à un passage d'un courant électrique entre le point primaire et le point intermédiaire ;
- un parasurtenseur primaire agencé électriquement en parallèle de l'organe primaire de diversion, entre le point primaire et le point intermédiaire ;
- un interrupteur secondaire, mécanique, interposé dans la ligne principale entre le point intermédiaire et le point secondaire, l'interrupteur secondaire présentant un état ouvert et un état fermé ;
- un résonateur principal comportant au moins une inductance principale et une capacité principale électriquement en série entre une première borne et une seconde borne du résonateur principal, la seconde borne étant reliée électriquement au point secondaire de la ligne principale,
- un interrupteur d'oscillation principal ;
- un parasurtenseur principal, agencé électriquement en parallèle au moins de la capacité principale du résonateur.

Un tel dispositif est caractérisé en ce que l'interrupteur d'oscillation principal comporte un commutateur à trois bornes comprenant :

- une borne directe reliée électriquement au point primaire de la ligne principale ;
- une borne d'inversion reliée électriquement au point intermédiaire de la ligne principale ;
- une borne de sortie reliée électriquement à la première borne du résonateur ;

et pouvant commuter au moins entre les trois états suivants :

- un état direct dans lequel la borne de sortie est reliée uniquement à la borne directe ;
- un état d'inversion dans lequel la borne de sortie est reliée uniquement à la borne d'inversion ; et
- un état isolé dans lequel la borne de sortie est isolée électriquement de la borne directe et de la borne d'inversion.

D'autres caractéristiques optionnelles d'un tel dispositif, prises seules ou en combinaison, sont énumérées ci-dessous.

Le commutateur peut-être bidirectionnel.

Le commutateur peut-être un commutateur électronique à semi-conducteurs.

Le commutateur peut comporter un interrupteur, qui sera appelé interrupteur direct, entre la borne directe et la borne de sortie et un interrupteur, qui sera appelé interrupteur inverseur, entre la borne d'inversion et la borne de sortie, avec au plus un seul des deux interrupteurs direct et inverseur qui est dans un état fermé à un instant donné.

L'interrupteur direct et l'interrupteur inverseur peuvent être des interrupteurs bidirectionnels.

L'interrupteur direct et l'interrupteur inverseur peuvent être des interrupteurs électroniques à semi-conducteurs.

L'interrupteur direct et / ou l'interrupteur inverseur peuvent comporter deux thyristors montés tête bêche, chacun dans l'une de deux branches électriquement en parallèle.

Chacun des deux thyristors peut être associé électriquement en série, dans sa branche, avec une diode.

L'organe primaire de diversion peut être un interrupteur, l'état passant correspondant à un état fermé de l'interrupteur et l'état de diversion correspondant à un état ouvert de l'interrupteur. L'organe de diversion peut notamment être un interrupteur mécanique. Dans ces deux cas, l'interrupteur primaire et l'interrupteur secondaire sont interposés successivement dans la ligne principale entre le point primaire et le point secondaire, de part et d'autre du point intermédiaire de la ligne principale, et sont aptes à être commandés indépendamment chacun entre leur état ouvert et leur état fermé.

Le dispositif peut comporter un circuit d'oscillation auxiliaire agencé électriquement en parallèle de l'interrupteur primaire entre le point primaire et le point intermédiaire, le circuit d'oscillation auxiliaire comportant au moins une inductance auxiliaire, une capacité auxiliaire et un enclencheur d'oscillation auxiliaire électriquement en série.

Le dispositif peut comporter, dans le circuit d'oscillation auxiliaire, un dispositif pilotable permettant de varier la valeur de résistance insérée en série dans le circuit d'oscillation auxiliaire.

Le dispositif pilotable peut comporter au moins une résistance d'amortissement et au moins un interrupteur de by-pass de la résistance d'amortissement, l'interrupteur de by-pass étant susceptible de basculer entre un état ouvert et un état fermé, la résistance d'amortissement et l'interrupteur de by-pass étant agencés de telle sorte que, dans un état de l'interrupteur de by-pass, la résistance d'amortissement est électriquement en série dans le circuit d'oscillation auxiliaire avec l'inductance auxiliaire, la capacité auxiliaire et l'enclencheur d'oscillation auxiliaire, tandis que, dans l'autre état de l'interrupteur de by-pass, la résistance d'amortissement est court-circuitée par rapport au circuit d'oscillation auxiliaire.

L'interrupteur primaire peut être un interrupteur « haute tension A » et l'interrupteur secondaire peut être un interrupteur « haute tension B ».

L'interrupteur primaire peut être un interrupteur à vide et l'interrupteur secondaire peut être un interrupteur à gaz isolant.

L'organe primaire de diversion peut comprendre ou peut être un limiteur de courant. Le limiteur de courant peut alors être configuré pour opposer une résistance électrique à tout courant le traversant dont l'intensité dépasse une valeur dite intensité de seuil.

Le limiteur de courant peut être du type résistance supraconductrice.

Le dispositif peut comporter un parasurtenseur de protection agencé électriquement entre le point primaire et la première borne du résonateur principal ou entre le point intermédiaire et la première borne du résonateur principal.

L'invention concerne par ailleurs un procédé de pilotage d'un dispositif de coupure tel que décrit ci-dessus, caractérisé en ce qu'il comporte les étapes :

- de basculement de l'organe primaire de diversion dans son état de diversion ;
- d'ouvrir mécaniquement l'interrupteur secondaire ;
- de commuter répétitivement le commutateur à trois bornes entre ses états direct et inverseur, en passant à chaque alternance par l'état isolé.

Dans un tel procédé de pilotage on peut arrêter de commuter le commutateur à trois bornes dès que le courant dans l'interrupteur secondaire est nul ou dès que la tension aux bornes du parasurtenseur primaire est nulle.

Le procédé peut comporter comporte l'étape de couper le courant dans l'organe primaire de diversion réalisé sous la forme d'un interrupteur primaire mécanique, après son ouverture mécanique, pour provoquer l'apparition, aux bornes du parasurtenseur primaire, d'une tension supérieure à la tension de transition du parasurtenseur primaire.

EP 3 942 585 B1

**Brève description des dessins**

[Fig. 1] La **figure 1** est une vue schématique d'un premier mode de réalisation d'un dispositif de coupure selon l'invention.

[Fig. 2] La **figure 2** illustre le dispositif de la Fig. 1, dans un état direct de son commutateur.

[Fig. 3] La **figure 3** illustre le dispositif de la Fig. 1, dans un état d'inversion de son commutateur.

[Fig. 4] La **figure 4** est une vue schématique d'un deuxième mode de réalisation d'un dispositif de coupure selon l'invention.

[Fig. 5] La **figure 5** est une vue schématique d'un troisième mode de réalisation d'un dispositif de coupure selon l'invention.

[Fig. 6] La **figure 6** est une vue schématique d'un quatrième mode de réalisation d'un dispositif de coupure selon l'invention.

[Fig. 7] La **figure 7** est une vue schématique d'un cinquième mode de réalisation d'un dispositif de coupure selon l'invention.

[Fig. 8] La **figure 8** est un graphe illustrant de manière schématique les variations de certaines des grandeurs caractéristiques du fonctionnement d'un dispositif selon le quatrième mode de réalisation de l'invention illustré à la **Fig. 6,** lors d'un processus d'ouverture.

[Fig. 9] La **figure 9** est un graphe illustrant de manière schématique les variations de certaines des grandeurs caractéristiques du fonctionnement d'un dispositif selon l'invention, lors d'un processus d'ouverture, dans une phase initiale de la commutation du commutateur.

[Fig. 10] La **figure 10** est un graphe illustrant de manière schématique les variations de certaines des grandeurs caractéristiques du fonctionnement d'un dispositif selon l'invention, lors d'un processus d'ouverture, dans une phase finale de la commutation du commutateur.

**Description des modes de réalisation**

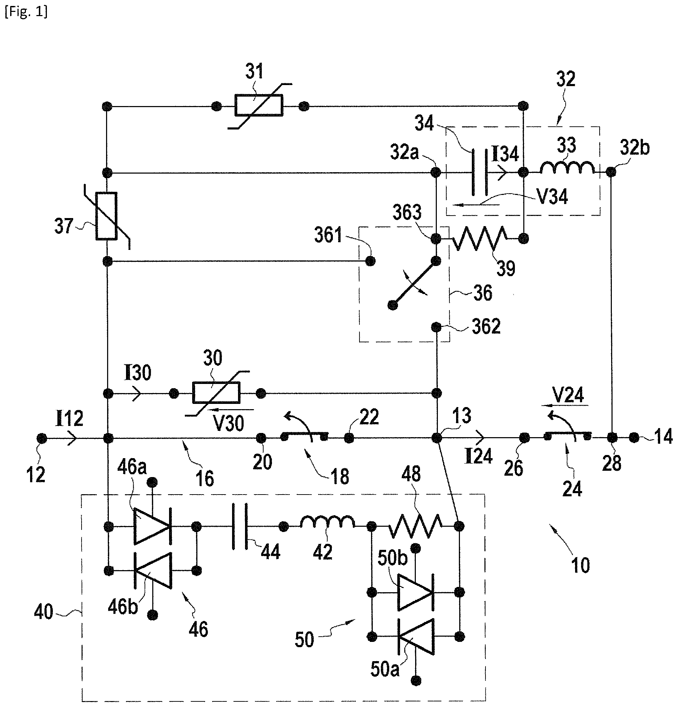

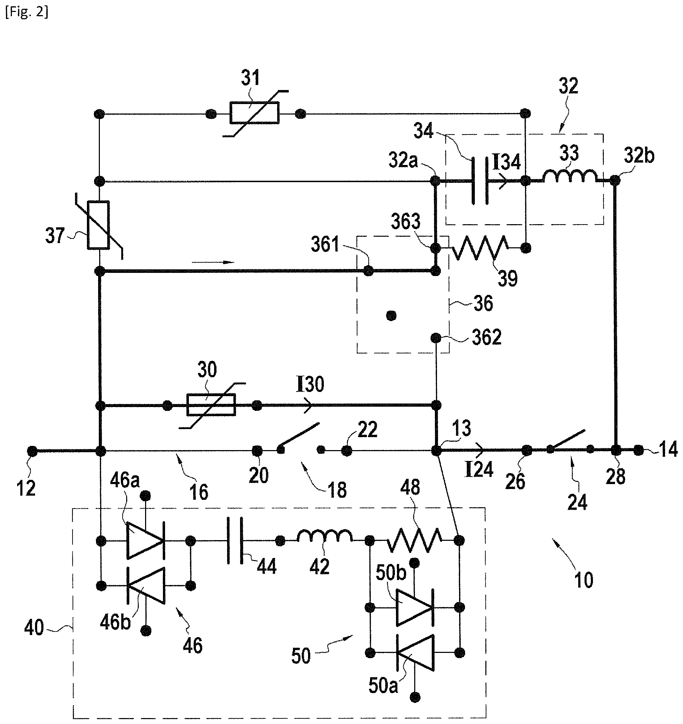

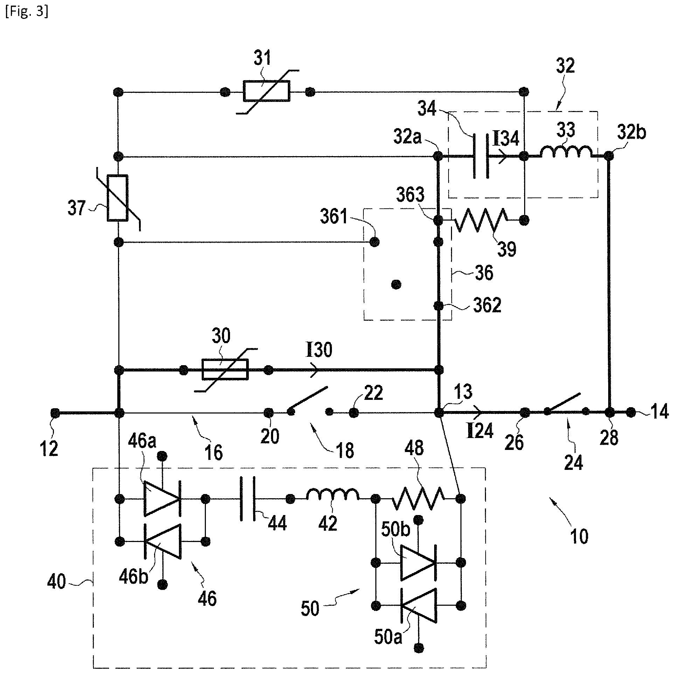

La **Figure 1** est une représentation schématique d'un premier mode de réalisation d'un dispositif de coupure **10** selon l'invention, pour un courant continu à « haute tension A », voire de préférence à « haute tension B ». Les **Figures 2** et **3** illustrent plus particulièrement ce dispositif respectivement dans un état direct et dans un état d'inversion de son commutateur, comme expliqué plus bas.

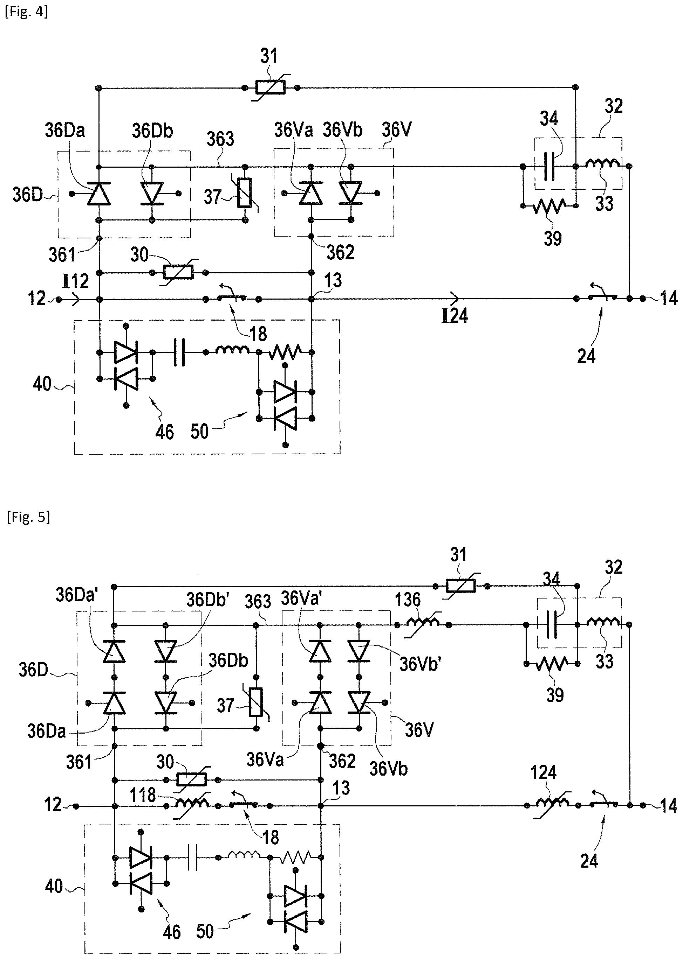

Les **Figures 4** à **7** représentent des variantes de réalisation de l'invention.

Comme on peut le voir sur les **Figure 1** à **7,** le dispositif de coupure de courant **10** comporte un point primaire, qui peut être une première borne **12,** et un point secondaire, qui peut être une deuxième borne **14.** Ce point primaire **12** et ce point secondaire **14,** ou bornes, forment des entrées / sorties pour le courant dans le dispositif **10.** Chacun de ces points peut correspondre à une borne physique du dispositif **10,** par exemple une borne de raccordement physique, ou une borne virtuelle du dispositif **10** comme étant un point le long d'un conducteur.

Le dispositif **10** comporte une ligne principale **16,** électriquement conductrice, qui s'étend entre la première borne **12** et la deuxième borne **14,** avec un point intermédiaire **13** dans la ligne principale entre le point primaire **12** et le point secondaire **14.**

Un organe primaire de diversion est interposé dans la ligne principale entre le point primaire **12** et le point intermédiaire **13.** Cet organe primaire de diversion, dont on verra plus loin qu'il peut comporter un interrupteur primaire **18** ou qu'il peut comporter un limiteur de courant **180,** présente au moins un état passant, dans lequel il conduit un courant électrique entre le point primaire et le point intermédiaire, de préférence avec un résistance électrique nulle ou négligeable, et au moins un état de diversion, dans lequel il s'oppose au moins en partie à un passage d'un courant électrique entre le point primaire et le point intermédiaire, par exemple de préférence avec un résistance électrique non négligeable, voire très grande, voire pouvant être considérée comme infinie dans le cas d'un interrupteur.

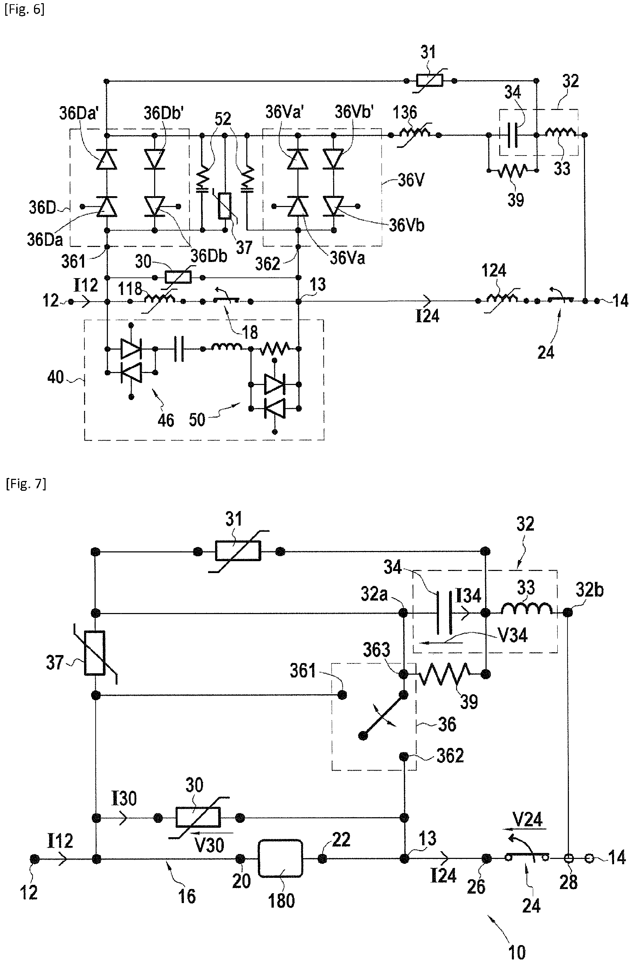

Dans les modes de réalisation des **Figs. 1** à **6,** l'organe primaire de diversion est réalisé sous la forme d'un

5

interrupteur primaire **18.** L'état passant de l'organe primaire de diversion correspondant alors à l'état fermé de l'interrupteur primaire **18,** et l'état de diversion de l'organe primaire de diversion correspond à l'état ouvert de l'interrupteur primaire **18.** Dans le mode de réalisation de la **Fig 7,** l'organe primaire de diversion est réalisé sous la forme d'un limiteur de courant **180.**

Dans tous les modes de réalisation, le dispositif de coupure **10** comporte un interrupteur secondaire **24,** mécanique, interposé dans la ligne principale entre le point intermédiaire **13** et le point secondaire **14.** L'interrupteur secondaire **24** est susceptible de se trouver dans l'un d'au moins deux états, à savoir un état ouvert ou un état fermé.

Dans les modes de réalisation des **Figs. 1 à 6,** on trouve ainsi, interposés successivement dans la ligne principale entre le point primaire **12** et le point secondaire **14,** l'organe primaire de diversion sous la forme d'un interrupteur primaire **18,** ayant une première borne **20** et une deuxième borne **22,** et l'interrupteur secondaire **24,** ayant lui aussi une première borne **26** et une deuxième borne **28.** La première borne **20** de l'interrupteur primaire **18,** ou plus généralement de l'organe primaire de diversion, est au même potentiel électrique que le point primaire **12.** La deuxième borne **28** de l'interrupteur secondaire **24** est au même potentiel électrique que le point secondaire **14.** La deuxième borne **22** de l'interrupteur primaire **18,** ou plus généralement de l'organe primaire de diversion, et la première borne **28** de l'interrupteur secondaire **24** sont au même potentiel électrique, et au même potentiel électrique qu'un point intermédiaire **13** de la ligne principale **16.** Le point intermédiaire **13** est agencé entre les deux interrupteurs **18, 24,** ou de manière plus générale entre l'organe primaire de diversion et l'interrupteur secondaire **24.** Lorsque l'interrupteur primaire **18,** ou plus généralement l'organe primaire de diversion, et l'interrupteur secondaire **24** sont dans un état passant ou fermé, laissant passer le courant électrique, ce dernier circule, au travers du dispositif **10,** dans la ligne principale **16,** qui est alors la ligne de plus faible impédance du dispositif **10** entre le point primaire **12** et le point secondaire **14.** L'un ou l'autre de l'interrupteur primaire **18** et l'interrupteur secondaire **24,** ou les deux, peuvent être basculés dans un état ouvert ou dans un état fermé.

Le dispositif **10** est destiné à être intégré dans une installation électrique. Par exemple, la première borne **12** du dispositif **10** peut être reliée à une portion de d'installation qui peut comprendre une source de haute tension, par exemple une source de « haute tension B », notamment supérieure à 100 Kilovolt. La deuxième borne **14** peut par exemple être reliée à un circuit consommateur de courant, par exemple une charge électrique ou un réseau électrique. De la sorte, on peut considérer que, dans l'exemple illustré, la première borne **12** est une borne amont, ou d'entrée du courant, tandis que la deuxième borne **14** est une borne aval, ou de sortie du courant, dans le sens de circulation du courant. Ainsi, dans cet exemple, la ligne principale **16** du dispositif serait destinée à être traversée par le courant nominal fourni par la source de tension continue. Cependant, le dispositif **10** selon l'invention, dans les modes de réalisation illustrés, est réversible, de sorte que l'on pourrait prévoir une circulation du courant au travers du dispositif selon le sens inverse.

L'installation électrique est prévue pour fonctionner sous une tension nominale continue, dans le domaine de la haute tension, donc au moins supérieure à 1500 Volt, de préférence dans le domaine de la « haute tension B », donc supérieure à 75.000 Volt, notamment supérieure à 100.000 Volt. L'invention trouvera notamment une application avantageuse pour un dispositif de coupure ayant la capacité de couper un courant allant jusqu'à 3000 Ampère, de préférence allant jusqu'à 10 000 Ampère, voire jusqu'à 20 000 Ampère, sous une tension supérieure d'au moins 100 000 Volt (100kV).

L'interrupteur primaire **18** et / ou l'interrupteur secondaire **24** peuvent être notamment de type disjoncteur, de type disjoncteur-sectionneur, de type coupe-circuit, etc.... Dans les exemples plus particuliers décrits plus bas en référence aux **Figs. 1** à **6,** l'interrupteur primaire **18** et l'interrupteur secondaire **24** sont par exemple chacun formés par un disjoncteur.

Pour les modes de réalisation des **Figs. 1** à **6,** l'interrupteur primaire **18** et, pour tous les modes de réalisation, l'interrupteur secondaire **24** sont de préférence tous les deux des appareils mécaniques de coupure électrique, dans lesquels la coupure électrique est obtenue par déplacement, notamment par écartement, de deux contacts électriques ou paires de contacts électriques. Dans les appareils mécaniques, le déplacement des contacts électriques est généralement réalisé par des organes de manoeuvre ou actionneurs mécaniques, pneumatiques, hydrauliques ou électriques, éventuellement à travers une cinématique de transfert du mouvement. Ce déplacement peut être contrôlé électroniquement. Comme indiqué plus haut, en présence d'un courant et/ou d'une tension importante, la séparation mécanique des contacts électriques peut se traduire par l'établissement d'un arc électrique entre les deux contacts électriques de l'interrupteur, du fait des énergies importantes accumulées dans le réseau que l'appareil protège. Tant que l'arc électrique reste établi au travers de la séparation mécanique, l'interrupteur ne réalise pas la coupure électrique puisqu'un courant continue de circuler au travers de l'interrupteur par la présence de l'arc. Comme on le verra plus loin, l'invention prévoit des moyens pour assurer la coupure électrique, au sens de l'interruption effective de la circulation du courant électrique.

L'interrupteur primaire **18** et / ou l'interrupteur secondaire **24** peuvent être constitués chacun par un unique appareil mécanique de coupure électrique, ou peuvent être constitués chacun par plusieurs appareils mécaniques de coupure électrique agencés électriquement en série et / ou en parallèle. Il peut s'agir d'un appareil dit « sous enveloppe métallique » où les moyens d'amené de courant (aussi appelés 'jeu de barre') sont enfermés dans une enceinte étanche emplie d'un fluide isolant. Les appareils sous enveloppe métallique peuvent notamment être conçus de manière plus compacte que les appareils où l'isolation est réalisée dans l'air.

Un interrupteur mécanique de coupure électrique peut se présenter sous la forme classique comportant notamment deux électrodes qui sont maintenues, par des supports isolants, dans des positions fixes éloignées de la paroi périphérique d'une enceinte qui est au potentiel de la terre. Ces électrodes sont reliées électriquement ou séparées électriquement en fonction de la position d'un organe de connexion mobile faisant partie de l'une des électrodes, par exemple un tube coulissant actionné par une commande. Le tube est généralement porté par une électrode, à laquelle il est relié électriquement, et la séparation du tube de l'électrode opposée est susceptible de créer un arc électrique qui peut s'allonger lors du mouvement d'ouverture de l'interrupteur au cours duquel le tube s'éloigne de l'électrode opposée. Un interrupteur mécanique de coupure électrique comporte traditionnellement deux couples de contacts électriques portés par le tube et les deux électrodes. Le premier couple est celui par lequel passe le courant nominal en position complètement fermée de l'appareil. Ce premier couple de contacts peut être secondé par un second couple de contacts, appelés contacts d'arcs ou couple de contacts secondaires. Les deux contacts de ce second couple ont vocation à rester en contact franc lors de la séparation du premier couple de façon à minimiser le phénomène d'arc sur le premier. Cela permet ainsi de garantir un bon état de conduction électrique en position complètement fermée, au niveau du premier couple de contacts. A l'inverse les contacts du second couple se séparent en dernier lieu et voient s'établir l'arc électrique.

Dans certains modes de réalisation de l'invention, l'interrupteur secondaire **24** est un interrupteur à fluide isolant, ou comporte au moins un interrupteur à fluide isolant, notamment à gaz isolant. Ce type d'interrupteurs est particulièrement adapté à l'interruption de courants sous « haute tension A », encore plus sous « haute tension B ». Dans un tel appareil, les organes actifs de coupure, notamment les contacts électriques, sont enfermés dans une enceinte étanche dans laquelle on trouve un fluide isolant qui peut être un gaz, couramment de l'hexafluorure de soufre (SF6), ou mélange de gaz, mais des liquides ou des huiles peuvent aussi être utilisés. Le fluide isolant peut être un fluide sous pression, par exemple sous une pression supérieure ou égale à 3 bars absolus. Ce fluide est choisi pour son caractère isolant, notamment de manière à présenter une rigidité diélectrique supérieure à celle de l'air sec à pression équivalente.

Dans certains modes de réalisation, l'interrupteur primaire **18** est un interrupteur sous vide, ou comporte au moins un interrupteur sous vide, où les organes actifs de coupure, notamment les contacts électriques, sont enfermés dans une enceinte étanche dans laquelle la pression est inférieure à la pression atmosphérique, notamment inférieure à 100 millibars, notamment inférieure à 10 microbar. Un tel interrupteur présente l'avantage de pouvoir assurer une coupure électrique complète même dans le cas d'un courant qui présente une forte vitesse de variation d'intensité, c'est pour lesquels la valeur de la dérivée de l'intensité par rapport au temps (dI/dt) est élevée.

Ainsi, dans certains modes de réalisation, dont le mode de réalisation qui va être décrit plus en détail plus loin, l'interrupteur primaire **18** est ou comporte un interrupteur sous vide et l'interrupteur secondaire **24** est ou comporte un interrupteur à fluide isolant, notamment à gaz isolant. Cependant, d'autres combinaisons sont possibles, par exemple une combinaison dans laquelle le dispositif comporte un interrupteur primaire et un interrupteur secondaire de même technologie, notamment tous les deux de type interrupteur sous vide.

Comme on peut le voir sur la **Fig. 1,** le dispositif **10** comporte un parasurtenseur primaire **30** agencé électriquement en parallèle de l'organe primaire de diversion, par exemple l'interrupteur primaire **18,** entre le point primaire **12** et le point intermédiaire **13.**

Un tel parasurtenseur **30** permet de limiter l'amplitude de la différence de potentiel aux bornes de l'organe primaire de diversion, par exemple l'interrupteur primaire **18,** ou plus généralement de tout composant ou ensemble de composant, en parallèle duquel ou desquels il est agencé. Un parasurtenseur, ou « voltage surge arester », est donc un dispositif qui limite les crêtes de tension à ses bornes. Un parasurtenseur comprend généralement un composant électrique qui présente une résistance variable en fonction de la tension électrique à ses bornes. La variation de la valeur de résistance n'est généralement pas linéaire avec la tension électrique aux bornes du parasurtenseur. Généralement, en-dessous d'une tension de transition aux bornes du parasurtenseur, la résistance de celui-ci est importante, avec une décroissance nulle ou relativement faible de sa résistance en fonction de l'augmentation de la tension, et le parasurtenseur ne laisse passer qu'un courant de fuite, de préférence inférieur à 1 ampère (A), voire inférieur à 100 milliampères (mA). Au contraire, au-dessus de la tension de transition aux bornes du parasurtenseur, la résistance de celui-ci décroît rapidement en fonction de l'augmentation de la tension, laquelle atteint une valeur de tension d'écrêtage, ou tension de protection, pour laquelle la résistance du parasurtenseur devient faible, voire très faible. En d'autres termes, le parasurtenseur agit comme un limiteur de tension à ses bornes sur l'intervalle de courant pour lequel il a été choisi. Il oppose la tension de protection lorsqu'on fait passer le courant le plus élevé pour lequel le parasurtenseur a été dimensionné. En deçà de la tension de transition, il tend à empêcher le passage du courant. Au-delà de la tension de transition, il autorise le passage du courant au travers du parasurtenseur pour une faible augmentation de la tension à ses bornes. De manière connue, la tension de transition n'est généralement pas une valeur précise mais correspond plutôt à une plage de tension de transition. Cependant, dans le présent texte, on prendra comme définition que la tension de transition d'un parasurtenseur est la tension pour laquelle le parasurtenseur laisse passer à son travers un courant de 1 ampère (A). La tension de protection est la tension aux bornes du parasurtenseur lorsqu'il est traversé par le courant le plus important pour lequel il a été dimensionné. Parmi les parasurtenseurs, on connaît notamment les parafoudres, lesquels peuvent notamment comprendre les varistances (ou varistors) et les diodes « TVS » (Transient Voltage Suppressor, telles que les diodes « Transil™ »). Notamment, dans le cadre de l'invention, un parasurtenseur, notamment le parasurtenseur primaire **30** peut comprendre un varistor à oxydes métalliques (ou MOV, signifiant « metal oxyde varistor »).

Avantageusement, on peut prévoir que la tension de transition du parasurtenseur primaire **30** peut être inférieure à un vingtième de la tension nominale de l'installation électrique dans laquelle est inséré le dispositif de coupure **10,** voire inférieure à un centième de cette tension. Ainsi, pour une tension nominale de l'installation électrique comprise dans la gamme allant de 100 000 à 500 000 volt, le parasurtenseur primaire **30** peut présenter une tension de transition comprise dans la gamme allant de 200 Volt à 50 000 Volt, de préférence comprise dans la gamme allant 200 de Volts à 5 000 Volt.

La tension de transition du parasurtenseur primaire **30** est donc strictement inférieure, et de beaucoup, à la tension nominale de l'installation électrique dans laquelle est inséré le dispositif de coupure **10.**

La tension de protection du parasurtenseur primaire **30** est elle aussi de préférence strictement inférieure à la tension nominale de l'installation électrique dans laquelle est inséré le dispositif de coupure **10.** Avantageusement, on peut prévoir que la tension de protection du parasurtenseur primaire 30 peut être inférieure à un cinquième, voire inférieure à un dixième de la tension nominale de l'installation électrique dans laquelle est inséré le dispositif de coupure **10,** voire inférieure à un cinquantième de cette tension.

Ainsi, en choisissant un parasurtenseur primaire **30** dont la tension de protection est très inférieure à la tension nominale de l'installation électrique dans laquelle est inséré le dispositif de coupure **10,** donc typiquement inférieure à 75.000 Volt ou moins, on s'assure que la tension aux bornes de l'organe primaire de diversion, par exemple l'interrupteur primaire **18,** reste inférieure ou égale à cette tension de protection. Cela permet par exemple d'utiliser un interrupteur dont le coût et l'encombrement sont très inférieurs aux systèmes équivalents capables de supporter de plus hautes tensions.

Le parasurtenseur primaire **30** peut être réalisé sous la forme d'un ensemble de plusieurs composants discrets agencés électriquement en série et / ou en parallèle. Chaque composant discret est par exemple un parafoudre, notamment une varistance, tel qu'un varistor à oxydes métalliques, ou une diode « TVS ». De préférence, l'ensemble de plusieurs composants discrets agencés électriquement en série et / ou en parallèle présente, du point de vue du reste du dispositif le comportement d'un parasurtenseur unique ayant une tension de transition équivalente pour l'ensemble et une tension de protection pour l'ensemble.

Comme on peut le voir sur les **Figs. 1** à **7,** le dispositif de coupure selon l'invention **10** comporte un résonateur **32** comportant au moins une inductance principale **33** et une capacité principale **34** électriquement en série, le résonateur ayant une première borne **32a** et une seconde borne **32b,** la seconde borne **32b** du résonateur **32** étant reliée électriquement au point secondaire **14** de la ligne principale **16.** Dans les exemples, la seconde borne **32b** du résonateur **32** est au même potentiel électrique que le point secondaire **14** de la ligne principale **16.** Dans ces exemples, le résonateur **32** est donc un dipôle LC en série. On pourrait prévoir que le résonateur **32** présente une certaine valeur de résistance électrique, formant ainsi un dipôle RLC en série, mais il est préférable dans ce cas que la valeur de résistance soit très faible, de préférence négligeable. Les caractéristiques électriques du résonateur **32** sont déterminées en fonction de l'intensité maximale de courant à couper, et en fonction de la performance de coupure de l'interrupteur secondaire **24,** notamment en fonction de la valeur maximale de variation d'intensité de courant dI24/dt pour laquelle cet interrupteur secondaire **24** est capable d'interrompre le courant. En effet, les caractéristiques électriques du résonateur **32** déterminent la fréquence propre de résonance du résonateur **32,** et donc la valeur maximale de variation d'intensité de courant dI24/dt lors des passages par zéro de l'intensité au travers de l'interrupteur secondaire **24.** Dans le cas où le résonateur **32** est un dipôle LC en série, cela induit le dimensionnement des valeurs de capacité C34 de la capacité **34** et d'inductance L33 de l'inductance **33** du résonateur **32.**

Le résonateur **32** est associé à un parasurtenseur principal **31** qui est agencé électriquement en parallèle au moins de la capacité principale **34** du résonateur **32.** Dans les exemples illustrés, le parasurtenseur principal **31** est agencé électriquement en parallèle uniquement de la capacité principale **34** du résonateur **32.** Ainsi, chacune des bornes du parasurtenseur principal **31** est au même potentiel électrique que l'une des bornes de la capacité principale **34** du résonateur **32.** Cependant, le parasurtenseur principal **31** pourrait être agencé électriquement en parallèle du résonateur **32** dans son ensemble, avec par chacune des bornes du parasurtenseur principal **31** au même potentiel électrique que l'une des bornes du résonateur **32.**

Avantageusement, comme dans l'exemple qui est illustré, on peut prévoir que le parasurtenseur principal **31** soit un parasurtenseur dont la tension de transition est du même ordre de grandeur que la tension nominale de l'installation électrique dans laquelle est inséré le dispositif de coupure **10,** tout en étant de préférence supérieure à cette tension nominale de l'installation électrique dans laquelle est inséré le dispositif de coupure **10.** La tension de transition du parasurtenseur principal **31** est par exemple comprise dans la gamme allant de 100 % à 150% de la tension nominale de l'installation électrique dans laquelle est inséré le dispositif de coupure **10.** On peut prévoir que le parasurtenseur principal **31** soit un parasurtenseur dont la tension de protection est comprise dans la gamme allant de 150 % à 300% de la tension nominale de l'installation électrique dans laquelle est inséré le dispositif de coupure **10**.

Le résonateur **32** est associé à un interrupteur d'oscillation principal **36**. L'interrupteur d'oscillation principal **36** comporte un commutateur à trois bornes comprenant :

- une borne directe **361** reliée électriquement au point primaire **12** de la ligne principale **16** ;
- une borne d'inversion **362** reliée électriquement au point intermédiaire **13** de la ligne principale **16** ;
- une borne de sortie **363** reliée électriquement à la première borne **32a** du résonateur **32**.

Dans les exemples, la borne directe **361** est au même potentiel électrique que le point primaire **12** de la ligne principale **16**.

Dans les exemples, la borne d'inversion **362** est au même potentiel électrique que le point intermédiaire **13** de la ligne principale **16**.

Dans les exemples, la borne de sortie **363** est au même potentiel électrique que la première borne **32a** du résonateur **32**.

L'interrupteur d'oscillation principal **36** peut être qualifié de commutateur à trois positions car il peut commuter au moins entre les trois états suivants :

- un état direct dans lequel la borne de sortie **363** est reliée électriquement uniquement à la borne directe **361** ;
- un état d'inversion dans lequel la borne de sortie **363** est reliée électriquement uniquement à la borne d'inversion **362** ; et
- un état isolé dans lequel la borne de sortie **363** est isolée électriquement de la borne directe **361** et de la borne d'inversion **362**, comme illustré à la **Fig. 1**.

Dans les exemples illustrés aux **Figs. 1 à 7**, il est prévu que l'interrupteur d'oscillation principal est constitué uniquement du commutateur **36**. Dans les exemples illustrés aux **Figs. 4 à 6**, il est prévu que le commutateur formant l'interrupteur d'oscillation principal **36** comporte un interrupteur **36D**, qui sera appelé interrupteur direct, entre la borne directe **361** et la borne de sortie **363** et un interrupteur **36V**, qui sera appelé interrupteur inverseur, entre la borne d'inversion **362** et la borne de sortie **363**, chaque interrupteur pouvant être dans un état ouvert ou dans un état fermé, avec au plus un seul des deux interrupteurs direct et inverseur qui est dans un état fermé à un instant donné.

De préférence, l'interrupteur d'oscillation principal **36** est bidirectionnel, c'est-à-dire capable de laisser le courant circuler dans les deux sens dans son état direct et dans son état d'inversion. Dans les exemples illustrés aux **Figs. 4 à 6**, l'interrupteur direct **36D** et l'interrupteur inverseur **36V** sont ainsi de préférence des interrupteurs bidirectionnels.

De préférence, l'interrupteur d'oscillation principal **36** est commandé électroniquement entre ses différents états, par exemple au moyen d'une unité de commande électronique. Dans les exemples illustrés aux **Figs. 4 à 6**, l'interrupteur direct **36D** et l'interrupteur inverseur **36V** sont commandés électroniquement entre leur état ouvert et leur état fermé, et inversement.

De préférence, l'interrupteur d'oscillation principal **36** est un interrupteur à semi-conducteurs. Dans les exemples illustrés aux **Figs. 4 à 6**, l'interrupteur direct **36D** et l'interrupteur inverseur **36V** sont des interrupteurs à semi-conducteurs, bien que des interrupteurs mécaniques soient aussi envisageables. Chacun de l'interrupteur direct **36D** et l'interrupteur inverseur **36V** peut, comme dans l'exemple de la **Fig. 4**, être réalisé sous la forme d'un assemblage de deux thyristors **36Da, 36Db**, ou **36Va, 36Vb**, montés tête-bêche, chacun dans l'une de deux branches électriquement en parallèle. L'utilisation de thyristors permet de faire transiter des courants d'intensité élevée en utilisant des composants moins nombreux et / ou plus compacts. Les thyristors pourront être de type GTO (« gate turn-off »), permettant d'obtenir, à caractéristiques électriques équivalentes, un dispositif encore plus compact. Un assemblage de deux thyristors montés tête-bêche est analogue à un TRIAC. L'utilisation de deux thyristors montés tête-bêche permet de réaliser des interrupteurs bidirectionnels à semi-conducteurs et à fermeture commandée électroniquement. A la **Fig. 5**, on illustre le cas où, dans un montage analogue à celui de la **Fig. 4**, chaque thyristor est associé électriquement en série, dans sa branche, avec une diode **36Da', 36Db'**, ou **36Va', 36Vb'**. L'utilisation de thyristors sera avantageuse pour bénéficier de la propriété de ces composants de repasser automatiquement dans leur état bloqué lorsque le courant qui les traverse devient nul. A la place de thyristors, d'autres composants à semi-conducteurs pourraient être utilisés, comme par exemple des transistors bipolaires à grille isolée (IGBTs), ou des éclateurs commandés.

Pour des raisons de tenue en tension ou en courant, chacun de l'interrupteur direct **36D** et / ou l'interrupteur inverseur **36V** peut être réalisé sous la forme d'un ensemble d'interrupteurs agencés électriquement en série et / ou en parallèle mais pouvant de préférence être commandés de manière à se comporter comme un interrupteur unique vis-à-vis du reste du dispositif.

Toutefois, on note que le placement de l'interrupteur d'oscillation principal **36** dans le dispositif **10** fait que, en fonctionnement normal, lorsque l'organe primaire de diversion, par exemple l'interrupteur primaire **18**, et l'interrupteur secondaire **24** sont dans leur état passant laissant passer le courant nominal, aucun courant ne passe par l'interrupteur d'oscillation principal **36,** ce qui limite les pertes électriques et limite l'usure des composants mis en oeuvre dans l'interrupteur d'oscillation principal **36.**

Dans les exemples illustrés, on a prévu, un parasurtenseur de protection **37** aux bornes de l'interrupteur direct **36D,** c'est-à-dire en parallèle des bornes direct **361** et de sortie **363** du commutateur **36.** Le parasurtenseur de protection **37,** optionnel, est ainsi agencé électriquement entre le point primaire **12** et la première borne **32a** du résonateur **32.** Cependant, le parasurtenseur de protection **37,** optionnel, pourrait être agencé électriquement entre le point intermédiaire **13** et la première borne **32a** du résonateur **32.** Le dispositif **10** peut être avantageusement dimensionné de sorte que le parasurtenseur de protection **37** ait sa tension de transition supérieure à la tension la plus élevée que le commutateur **36** ait à supporter lors de la coupure du courant le plus important. Par ailleurs, le commutateur **36** est avantageusement dimensionné pour pouvoir supporter la somme de la tension de protection du parasurtenseur de protection **37** avec la tension de protection du parasurtenseur **30.** Dans les exemples illustrés, le parasurtenseur de protection **37** est agencé de telle sorte que le parasurtenseur principal **31** se trouve électriquement en parallèle de la capacité **34,** mais pas du parasurtenseur de protection **37.** Alternativement, en présence d'un tel parasurtenseur de protection **37,** le parasurtenseur principal **31** pourrait être agencé électriquement en parallèle de l'ensemble de la capacité **34** et du parasurtenseur de protection **37,** voire être agencé électriquement en parallèle de l'ensemble du résonateur **32** et du parasurtenseur de protection **37.**

Dans certains modes de réalisation, tels que ceux illustrés aux **Figs. 1** à **7,** il est prévu un circuit de décharge de la capacité principale **34.** Dans les exemples illustrés, le circuit de décharge est un circuit de décharge passif, ne comportant pas de composant actif. Dans cet exemple, le circuit de décharge comporte une résistance **39** qui est agencée en parallèle de la capacité principale **34.** De préférence, la résistance **39** présente une valeur de résistance électrique R39 élevée, par exemple supérieure à 100.000 Ohm, de telle sorte que le dipôle qui est constitué de la capacité principale **34** et de la résistance **39** agencés en parallèle présente une constante de temps importante par rapport à un délai de coupure électrique dans l'interrupteur secondaire **24,** par exemple une constante de temps supérieure à 50 millisecondes, de préférence supérieure à 100 millisecondes. Dans cet exemple la constante de temps est égale au produit R39 x C34. Un autre type de circuit de décharge, non illustré dans les dessins, peut comporter au moins un composant actif, tel qu'un interrupteur commandé. Ainsi, un circuit de décharge pourrait comprendre un interrupteur commandé qui serait agencé directement en série électriquement avec la résistance **39,** l'ensemble de ces deux composants étant en parallèle de la capacité principale **34.** Lorsque l'interrupteur commandé serait basculé dans un état fermé laissant passer le courant, il se formerait un circuit de décharge entre les deux armatures de la capacité principale **34.**

Dans les exemples illustrés aux **Figs. 1** à **6,** comportant un interrupteur primaire **18** mécanique en guise d'organe primaire de diversion, le dispositif de coupure **10** comporte avantageusement, mais à titre optionnel, un circuit d'assistance à la coupure électrique effective du courant au travers de l'interrupteur primaire **18,** ici réalisé sous la forme d'un circuit d'oscillation auxiliaire **40** qui est agencé électriquement en parallèle de l'interrupteur primaire **18** entre le point primaire **12** et le point intermédiaire **13.** Le circuit d'oscillation auxiliaire **40** est conçu pour, et apte à générer un passage par zéro du courant au travers de l'interrupteur primaire **18,** et ici uniquement au travers de l'interrupteur primaire **18** et pas au travers de l'interrupteur secondaire **24.**

Un tel circuit d'oscillation auxiliaire **40** a pour but de favoriser la coupure électrique au travers de l'interrupteur primaire **18** lorsque celui-ci est mécaniquement ouvert. En effet, on a vu que, même après ouverture d'un tel interrupteur, un arc électrique peut s'être établi entre les contacts séparés de l'interrupteur, empêchant la réalisation d'une coupure électrique effective. Le passage par zéro du courant au travers de l'interrupteur primaire, généré par le circuit d'oscillation auxiliaire **40,** permet de favoriser la coupure électrique au travers de l'interrupteur primaire **18.**

Différents modes de réalisation sont possibles pour un tel circuit d'oscillation auxiliaire **40.** Notamment, il est possible d'utiliser un circuit d'oscillation tel que décrit dans certains documents de l'art antérieur.

Dans certains modes de réalisation, tels que ceux illustrés, le circuit d'oscillation auxiliaire **40** comporte au moins une inductance auxiliaire **42,** une capacité auxiliaire **44** et un enclencheur d'oscillation auxiliaire **46,** agencés électriquement en série dans le circuit d'oscillation auxiliaire **40** en parallèle de l'interrupteur primaire **18** entre le point primaire **12** et le point intermédiaire **13.** Dans des variantes non illustrées, on pourrait utiliser un circuit d'oscillation auxiliaire **40** comportant uniquement une inductance auxiliaire, une capacité auxiliaire et un enclencheur d'oscillation auxiliaire, agencés électriquement en série dans le circuit d'oscillation auxiliaire en parallèle de l'interrupteur primaire **18** entre le point primaire **12** et le point intermédiaire **13.**

Pour le fonctionnement d'un circuit d'oscillation auxiliaire **40,** il peut être avantageux que la capacité auxiliaire soit pré-chargée avant l'enclenchement du circuit d'oscillation auxiliaire **40.** Dans ce cas, le circuit d'oscillation auxiliaire **40** peut comporter, en plus, un circuit de pré-charge de la capacité auxiliaire **44** (non illustré sur les figures).

Par ailleurs, comme dans les exemples illustrés, on peut avantageusement prévoir, dans un tel circuit d'oscillation auxiliaire, un dispositif pilotable **(50, 50')** permettant de varier la valeur de résistance insérée en série dans le circuit d'oscillation auxiliaire **40.**

Ainsi, dans les exemples illustrés, le circuit d'oscillation auxiliaire **40** comporte au moins une résistance d'amortissement **48** et au moins un interrupteur de by-pass **50** de la résistance d'amortissement. L'interrupteur de by-pass **50** est susceptible de basculer entre un état ouvert et un état fermé. La résistance d'amortissement **48** et l'interrupteur de by-pass **50** sont agencés de telle sorte que, dans un état de l'interrupteur de by-pass **50**, la résistance d'amortissement **48** est électriquement en série dans le circuit d'oscillation auxiliaire **40** avec l'inductance **42**, la capacité auxiliaire **44** et l'enclencheur d'oscillation auxiliaire **46**, tandis que, dans l'autre état de l'interrupteur de by-pass **50**, la résistance d'amortissement **48** est court-circuitée par rapport au circuit d'oscillation auxiliaire **40**.

On note que la résistance d'amortissement **48** peut être réalisée sous la forme d'un ensemble de plusieurs composants discrets agencés électriquement en série et / ou en parallèle. L'interrupteur de bypass associé **50** est alors généralement agencé électriquement en parallèle de l'ensemble.

Dans les exemples, la résistance d'amortissement **48** est électriquement en série avec l'inductance auxiliaire **42**, la capacité auxiliaire **44** et l'enclencheur d'oscillation auxiliaire **46**, dans une ligne électrique du circuit d'oscillation auxiliaire **40** qui s'étend du point primaire **12** au point intermédiaire **13**, ici directement et uniquement en parallèle de l'interrupteur primaire **18**. L'interrupteur de by-pass **50** est agencé directement et uniquement en parallèle de la résistance d'amortissement **48**. Ainsi, lorsque l'interrupteur de by-pass **50** est dans un état ouvert, la résistance d'amortissement **48** est électriquement en série dans le circuit d'oscillation auxiliaire **40** avec l'inductance auxiliaire **42**, la capacité auxiliaire **44** et l'enclencheur d'oscillation auxiliaire **46**, tandis que, lorsque l'interrupteur de by-pass **50** est dans un état fermé, la résistance d'amortissement **48** est court-circuitée par rapport au circuit d'oscillation auxiliaire **40**.

L'enclencheur d'oscillation auxiliaire **46** est un interrupteur, avantageusement un interrupteur à semi-conducteurs, bien qu'un interrupteur mécanique soit aussi envisageable. Il est de préférence bidirectionnel. Il peut ainsi être, comme dans les exemples, réalisé sous la forme d'un assemblage en parallèle de deux thyristors montés tête-bêche. Un tel assemblage est analogue à un TRIAC. Cependant, d'autres composants à semi-conducteurs pourraient être utilisés, comme par exemple des IGBTs ou d'autres types d'éclateurs commandés. Pour des raisons de tenue en tension ou en courant, l'enclencheur d'oscillation auxiliaire **46** peut être réalisé sous la forme d'un ensemble d'interrupteurs agencés électriquement en série et / ou en parallèle mais pouvant de préférence être commandés de manière à se comporter comme un interrupteur unique vis-à-vis du reste du dispositif.

L'interrupteur de by-pass **50** est avantageusement un interrupteur à semi-conducteurs, bien qu'un interrupteur mécanique soit aussi envisageable. Il est de préférence bidirectionnel. Il peut ainsi être, comme dans les exemples, réalisé sous la forme d'un assemblage en parallèle de deux thyristors **50a, 50b** montés tête-bêche. Un tel assemblage est analogue à un TRIAC. Cependant, d'autres composants à semi-conducteurs pourraient être utilisés, comme par exemple des IGBTs ou d'autres types d'éclateurs commandés. Pour des raisons de tenue en tension ou en courant, l'interrupteur de by-pass **50** peut être réalisé sous la forme d'un ensemble d'interrupteurs agencés électriquement en série et / ou en parallèle mais pouvant de préférence être commandés de manière à se comporter comme un interrupteur unique vis-à-vis du reste du dispositif.

Selon des variantes non illustrées, le circuit d'oscillation auxiliaire **40** pourrait comporter au moins une résistance permanente, insérée de manière permanente dans le circuit d'oscillation auxiliaire **40**, électriquement en série avec l'inductance auxiliaire **42**, la capacité auxiliaire **44** et l'enclencheur d'oscillation auxiliaire **46**, avec pour résultat de déterminer une valeur minimum de résistance du circuit oscillant, lorsque la résistance d'amortissement **48** est court-circuitée par rapport au circuit d'oscillation auxiliaire **40**. La résistance permanente pourrait être réalisée sous la forme d'un ensemble de plusieurs composants discrets agencés électriquement en série et / ou en parallèle.

Selon encore une autre variante de réalisation d'un circuit d'oscillation auxiliaire **40**, le circuit d'oscillation auxiliaire **40** pourrait comporter au moins une seconde résistance d'amortissement et au moins un second interrupteur de by-pass associé à la seconde résistance d'amortissement, agencés, par exemple en parallèle l'un de l'autre, de telle sorte que, dans un état du second interrupteur de by-pass, la seconde résistance d'amortissement serait électriquement en série dans le circuit d'oscillation auxiliaire **40** avec l'inductance **42**, la capacité **44** et l'enclencheur d'oscillation **46**, et avec la première résistance d'amortissement **48** si celle-ci est insérée dans le circuit d'oscillation auxiliaire **40**. Dans l'autre état du second interrupteur de by-pass, la seconde résistance d'amortissement serait court-circuitée par rapport au circuit d'oscillation auxiliaire **40**. Bien entendu, on pourrait généraliser cette variante à plus de deux résistances d'amortissement, et par conséquent plus de deux interrupteurs de by-pass. En ayant plusieurs résistance d'amortissement associées chacune à un interrupteur de by-pass, on peut prévoir que les interrupteurs de by-pass soient commandés simultanément. On peut au contraire prévoir que certains au moins des interrupteurs de by-pass du circuit d'oscillation soient basculés avec un décalage de temps l'un par rapport à l'autre. Ainsi, on peut adapter la valeur totale de résistance du circuit oscillant à plus de deux paliers de valeur de résistance.

On note que les deux variantes évoquées ci-dessus peuvent être combinées dans un circuit d'oscillation comportant à la fois au moins une résistance permanente et plusieurs résistances d'amortissement, toutes étant insérées en série ou susceptibles d'être insérées en série les unes avec les autres dans le circuit d'oscillation.

D'autres modes de réalisation pour un circuit d'oscillation auxiliaire **40** peuvent être prévus, mettant par exemple en oeuvre des interrupteurs commandés, par exemple des interrupteurs à semi-conducteurs configurés selon un pont en H, selon un demi-pont, etc.... Ces interrupteurs peuvent être réalisés chacun sous la forme d'un IGBT (Insulated Gate Bipolar Transistor), de thyristors, ou autre type de transistor. De manière générale, l'invention pourra être mise en oeuvre avec encore d'autres types de circuit d'assistance à la coupure électrique effective du courant au travers de l'interrupteur primaire **18,** notamment tels que décrits dans les documents d'art antérieur mentionnés en préambule.

Dans un procédé de pilotage d'un dispositif de coupure **10** selon l'invention, en vue d'amener le dispositif de son état fermé à son état ouvert, on prévoit d'une part le basculement de l'organe primaire de diversion dans son état de diversion et d'autre part l'ouverture mécanique de l'interrupteur secondaire **24.**

Dans le cas où l'organe primaire de diversion est un interrupteur, son basculement dans son état de diversion correspond à l'ouverture de l'interrupteur. Le procédé comprend alors une étape comprenant l'ouverture mécanique de l'interrupteur primaire **18** et l'interrupteur secondaire **24.** Les deux interrupteurs peuvent être ouverts mécaniquement simultanément, ou successivement dans un ordre quelconque.

On prend par exemple l'hypothèse que cette ouverture et / ou basculement est / sont effectifs à un premier instant. L'étape d'ouverture de l'interrupteur secondaire, ou des deux interrupteurs et, pour certaines variantes du mode de réalisation de la **Fig. 7,** l'étape de commande de basculement du limiteur de courant, peut être déclenchée sous charge normale, par exemple avec un courant **I12** inférieur ou égal à un courant nominal maximal prévu au travers du dispositif **10,** par une simple volonté d'ouverture du dispositif de coupure, en vue par exemple d'isoler électriquement une partie d'installation électrique reliée électriquement au point primaire **12** du dispositif **10** par rapport à une autre partie d'installation électrique reliée électriquement au point secondaire **14** du dispositif **10.** L'étape d'ouverture de l'interrupteur secondaire, ou des deux interrupteurs et, pour certaines variantes du mode de réalisation de la **Fig. 7,** l'étape de commande de basculement du limiteur de courant, peut être déclenchée en présence d'un défaut électrique dans l'installation électrique, par exemple avec un courant **I12** égal à un courant de défaut au travers du dispositif de coupure **10.** Ce courant de défaut peut être supérieur au courant nominal maximal prévu au travers du dispositif **10.** Une telle ouverture en présence d'un défaut peut résulter de la détection de ce défaut, notamment de la détection d'un ou plusieurs paramètres du courant au travers du dispositif **10,** par exemple l'intensité du courant au travers du dispositif **10.** On note que, comme décrit précédemment, il se peut que l'ouverture mécanique du ou des deux interrupteurs **18, 24** ne permette pas, à elle seule l'ouverture électrique au sens de l'interruption du passage du courant au travers du dispositif de coupure **10,** par la faute de l'établissement d'un arc électrique au travers de l'interrupteur **24** ou de chacun de deux interrupteurs. Pour la description du procédé qui va suivre, on se place justement dans cette hypothèse.

Dans cette hypothèse, dans un dispositif tel que sur les **Figs. 1** à **6** comportant un interrupteur primaire **18** en guide d'organe de diversion, le procédé prévoit de couper le courant dans l'interrupteur primaire **18** ouvert pour provoquer l'apparition, aux bornes de l'interrupteur primaire, d'une tension supérieure à la tension de transition du parasurtenseur primaire **30** propre à le faire basculer dans un mode de conduction de courant. Pour couper le courant dans l'interrupteur primaire **18** ouvert, il peut être fait usage de l'un ou l'autre des circuits d'oscillation auxiliaire **40** tels que décrits plus haut, selon ce qui sera décrit plus bas. Cependant, la coupure de courant dans l'interrupteur primaire **18** ouvert peut être obtenue par d'autres moyens, notamment par un dimensionnement adapté de l'interrupteur primaire **18,** quitte à ce que ce dimensionnement conduise à un interrupteur primaire plus encombrant et / ou plus cher que celui pouvant être utilisé en cas de présence d'un circuit d'oscillation. La mise en oeuvre du circuit d'oscillation auxiliaire **40** commence à un deuxième instant, postérieur au premier instant, ce deuxième instant correspondant à la fermeture de l'enclencheur d'oscillation auxiliaire **46,** et on prend l'hypothèse que cette ouverture électrique de l'interrupteur primaire **18** est effective à un troisième instant postérieur au deuxième instant.

Dans tous les cas, cette coupure du courant au travers de l'interrupteur primaire **18,** ou le basculement du limiteur de courant **180** dans son état de diversion, se traduit par l'apparition d'une tension aux bornes du parasurtenseur primaire **30,** et donc de la même tension aux bornes de l'interrupteur primaire **18** ou du limiteur de courant **180.** Dans l'hypothèse d'un courant de défaut important, cette tension atteint la tension de protection du parasurtenseur primaire **30,** à un quatrième instant postérieur au troisième instant. Le parasurtenseur primaire **30** voit alors sa résistance varier pour limiter l'augmentation de la tension, laquelle atteint un palier. A ce stade, on considère que le parasurtenseur primaire **30** devient passant pour le courant. Ainsi, dans un dispositif tel que sur les **Figs. 1** à **6,** on peut considérer que, à partir de ce quatrième instant, le courant au travers du dispositif **10** passe au travers du parasurtenseur primaire **30** mais continue de circuler au travers de l'interrupteur secondaire **24** du fait de la présence d'un arc électrique entre les contacts de ce dernier. Dans le mode de réalisation de la **Fig. 7,** une petite partie du courant passe par le limiteur de courant **180** tandis qu'une grande majorité du courant passe, en parallèle, au travers du parasurtenseur primaire **30.**

Pour les dispositifs tels que sur les **Figs. 1** à **6,** pour provoquer la coupure de l'arc électrique dans l'interrupteur secondaire **24,** on doit attendre de préférence que le courant au travers de l'enclencheur d'oscillation auxiliaire **46** s'annule, et qu'il récupère son isolation,

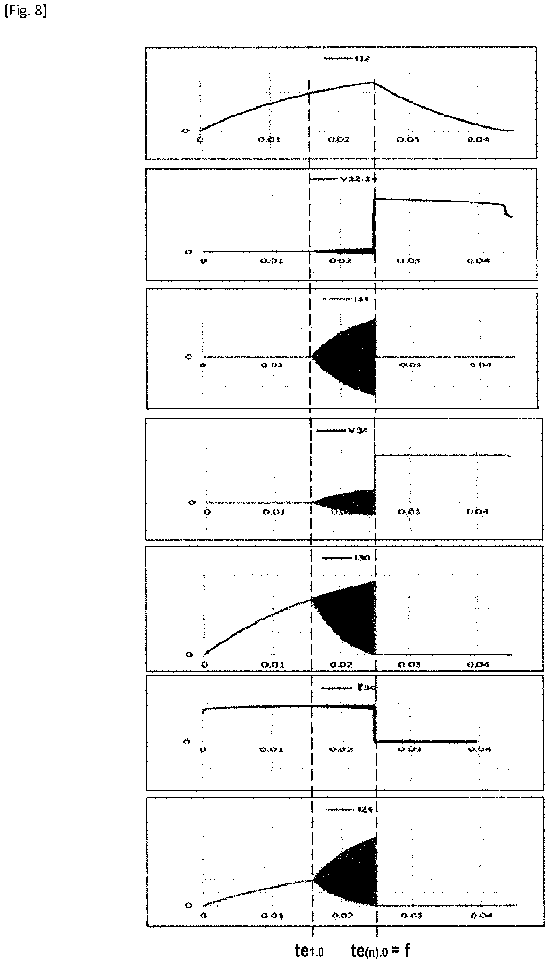

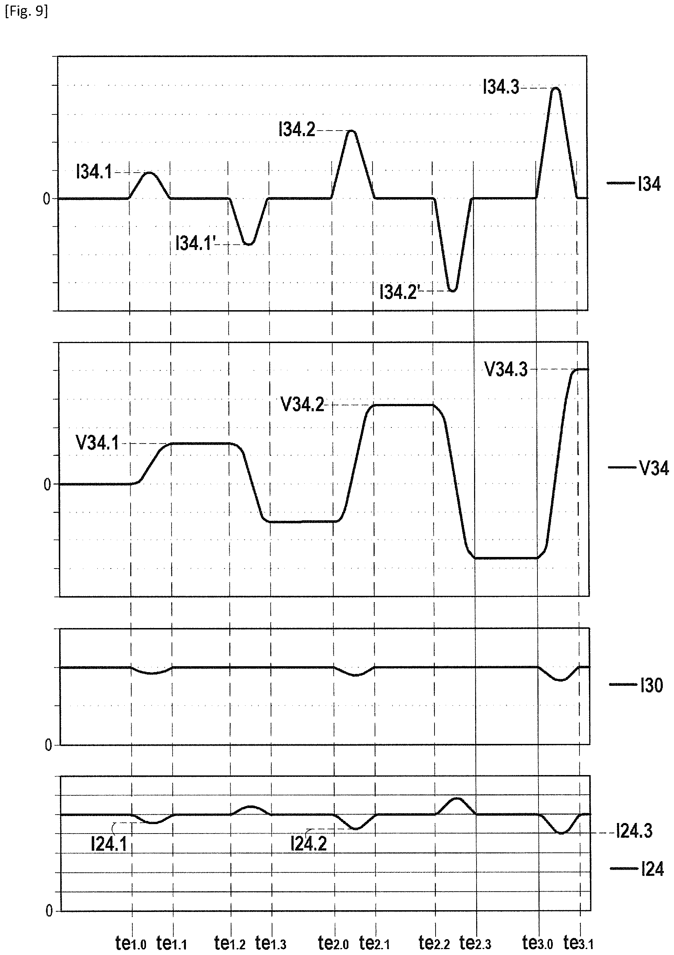

Pour tous les modes de réalisation, pour provoquer la coupure de l'arc électrique dans l'interrupteur secondaire **24,** on utilise le résonateur **32** en commandant de manière adéquate l'interrupteur d'oscillation principal **36,** à partir de l'instant **te1.0** de première commutation du commutateur **36** sur les **Fig. 8** et **9,** cet instant **te1.0** de première commutation du commutateur **36** étant postérieur au quatrième instant auquel on considère que le parasurtenseur primaire **30** devient passant pour le courant.

La commande de l'interrupteur d'oscillation principal **36** comprend notamment, à partir de l'instant **te1.0** de première commutation, l'étape de commuter répétitivement le commutateur à trois bornes entre ses états direct et inverseur, en passant à chaque alternance par l'état isolé. Cette commutation est de préférence opérée à une fréquence de cycles de commutation adaptée à une fréquence de résonance du circuit d'oscillation principal, laquelle est notamment déterminée par la fréquence propre de résonances du résonateur principal **32.**

Dans l'état direct du commutateur **36,** il est formé dans le dispositif un circuit de charge de la capacité principale **34,** ce qui est illustré à la **Fig. 2.** Dans l'état d'inversion du commutateur **36,** il est formé dans le dispositif un circuit d'inversion de polarité de charge de la capacité principale **34,** ce qui est illustré à la **Fig. 3.**

Dans la suite de la description, on prend l'hypothèse qu'un courant de défaut **I12** circule au travers du dispositif **10** depuis le point primaire **12** vers le point secondaire **14,** de gauche à droite sur les figures. On rappelle que, dans les modes de réalisation illustrés, le dispositif est bidirectionnel, au sens qu'il est capable d'interrompre un courant de défaut quel que soit le sens de circulation de ce courant de défaut au travers du dispositif **10.**

La **Fig. 8** illustre la variation en fonction du temps des paramètres suivants :

- l'intensité **I12** du courant au travers du dispositif **10** ;
- la tension **V1214** aux bornes **12, 14** du dispositif **10** ;
- l'intensité **I34** du courant au travers de la capacité principale **34** ;
- la tension **V34** aux bornes de la capacité principale **34** ;
- l'intensité **I30** du courant au travers du parasurtenseur primaire **30** ;
- la tension **V30** aux bornes du parasurtenseur primaire **30** ;
- l'intensité **I24** du courant au travers de l'interrupteur secondaire **24.**

La **Fig. 9** illustre, dans une phase initiale de la commutation du commutateur **36,** la variation en fonction du temps des paramètres suivants :

- l'intensité **I34** du courant au travers de la capacité principale **34** ;
- la tension **V34** aux bornes de la capacité principale **34** ;
- l'intensité **130** du courant au travers du parasurtenseur primaire **30** ;
- l'intensité **124** du courant au travers de l'interrupteur secondaire **24.**

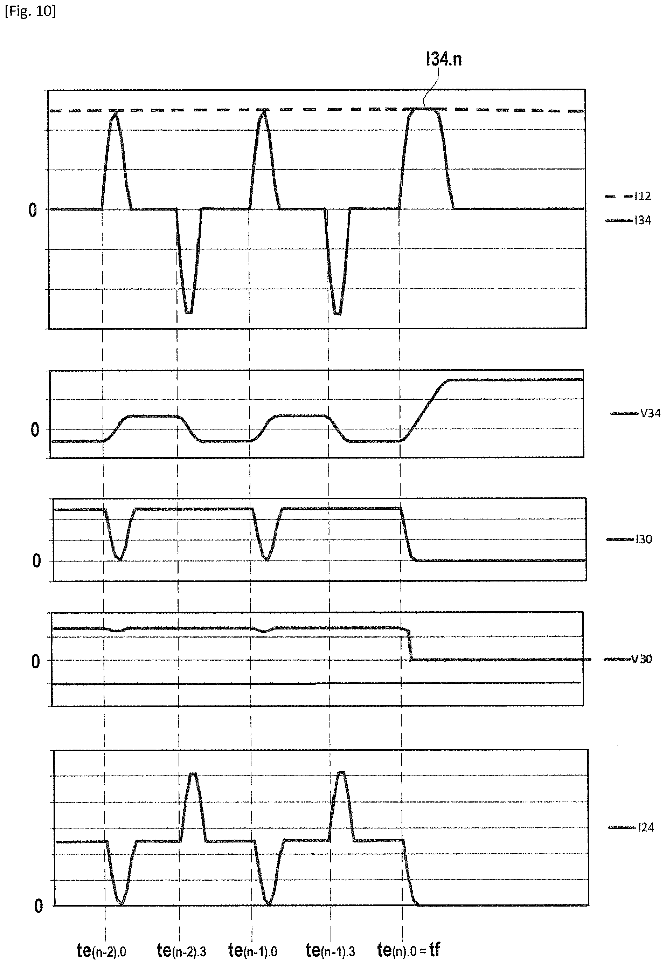

La **Fig. 10** illustre, dans une phase finale de la commutation du commutateur **36,** la variation en fonction du temps, des paramètres suivants :

- l'intensité **112** du courant au travers du dispositif **10** ;
- l'intensité **134** du courant au travers de la capacité principale **34** ;
- la tension **V34** aux bornes de la capacité principale **34** ;
- l'intensité **I30** du courant au travers du parasurtenseur primaire **30** ;
- la tension **V30** aux bornes du parasurtenseur primaire **30** ;
- l'intensité **I24** du courant au travers de l'interrupteur secondaire **24.**

Comme on le voit sur les **Figs. 8** et **10,** la coupure la coupure de l'arc électrique dans l'interrupteur secondaire **24** est obtenue après un nombre « n » de cycles de commutations du commutateur **36,** à un instant **te(n).0 = tf.** En pratique, la phase active de commutation cyclique du commutateur **36,** qui débute à l'instant **te1.0** de première commutation du commutateur **36** et que se termine à l'instant de la coupure de l'arc électrique dans l'interrupteur secondaire **24,** présente une durée dont l'ordre de grandeur peut être comprise entre 100 microsecondes et 20 millisecondes.

Pour la description qui va suivre, on considère qu'à l'état initial, jusqu'à l'instant **te1.0** de première commutation, le commutateur **36** est dans son état isolé, et on considère que la capacité principale **34** est déchargée, par exemple par la présence du circuit de décharge qui est ici réalisé par la résistance de décharge **39.** On considère aussi que, dans l'exemple illustré, la valeur de résistance R39 de la résistance de décharge **39** est suffisamment importante pour négliger le courant de décharge au travers de la résistance de décharge **39** pendant toute la phase active de commutation cyclique du commutateur **36.**

De ce fait, à l'instant **te1.0** de première commutation et du fait de la présence d'une différence de potentiel aux bornes du parasurtenseur primaire **30,** le courant au travers du dispositif **10** bascule en partie vers le résonateur **32** pour charger la capacité principale **34,** sur un premier cycle de charge, ceci pendant une période dite de charge directe de ce premier cycle, qui dure jusqu'à un instant **te1.1** auquel le commutateur **36** commute dans son état isolé. Pendant cette période de charge directe du premier cycle, on voit à la **Fig. 9** que le courant dans la capacité principale **34** correspond à la charge directe du résonateur **32,** qui est dans le cas illustré de type LC série, avec un courant d'abord croissant jusqu'à une valeur de pic d'intensité **I34.1** du courant dans la capacité principale **34** pour cette période de charge directe (ci-après intensité du courant de charge directe) du premier cycle, puis décroissant jusqu'à la valeur nulle, selon une demi-alternance. La durée de cette demi-alternance dépend directement de la fréquence propre de résonance du résonateur **32,** laquelle vaut $1/(2\pi \sqrt{L33 * C34})$ . Cette fréquence propre de résonance sera par exemple comprise entre 0.1 kHz à 100kHz, de préférence comprise entre 1 kHz à 10kHz. On note que, pendant cette période de charge directe, et ceci sera vrai pour chaque cycle de commutation, les intensités des courants **I30** dans le parasurtenseur primaire **30** et **I24** dans l'interrupteur secondaire **24** sont diminuée de l'intensité du courant de charge directe **I34.** Pour les premiers cycles, l'intensité du courant de charge directe **I34.1** est très inférieure à l'intensité du courant **I12** qui traverse le dispositif **10,** surtout s'il s'agit d'une intensité de défaut.

De préférence, l'instant **te1.1** auquel le commutateur **36** commute dans son état isolé correspond à l'atteinte de cette valeur nulle de l'intensité du courant de charge directe à la fin de cette demi-alternance du courant dans la capacité principale **34.** Il en résulte une charge dans la capacité principale **34,** donc une tension **V34** à ses bornes qui atteint, en fin de cette période de charge directe du premier cycle, une valeur **V34.1.**

Le commutateur demeure dans son état isolé pendant une durée d'isolation depuis l'instant **te1.1** auquel le commutateur **36** commute dans son état isolé, jusqu'à un instant **te1.2** auquel le commutateur **36** commute dans son état d'inversion pour ce premier cycle, pour une période dite d'inversion de ce premier cycle, qui dure jusqu'à un instant **te1.3** auquel le commutateur commute de nouveau dans son état isolé. Pendant, cette période d'inversion du premier cycle, on voit à la **Fig. 9** que le courant dans la capacité principale **34** correspond à une inversion de la charge du résonateur **32,** qui est ici de type LC série, avec un courant qui circule cette fois-ci en sens inverse au travers du résonateur **32,** et donc au travers de la capacité principale **34** d'abord décroissante (donc croissante en valeur absolue) jusqu'à une valeur du module du pic d'intensité **I34.1'** du courant dans la capacité principale **34** pour cette période d'inversion (ci-après intensité du courant d'inversion) du premier cycle, puis croissante (donc décroissante en valeur absolue) jusqu'à la valeur nulle, selon une demi-alternance. Dans un même cycle, la valeur du module du pic d'intensité **I34.1'** du courant dans la capacité principale **34** pour la période d'inversion est supérieure à la valeur de pic d'intensité **I34.1** du courant dans la capacité principale **34** pour la période de charge directe qui précède la dite période d'inversion.

De préférence, l'instant **te1.3** auquel le commutateur **36** commute de nouveau dans son état isolé correspond à l'atteinte de cette valeur nulle à la fin de cette demi-alternance de sens inverse du courant dans la capacité principale **34.** Il en résulte une charge dans la capacité principale **34,** donc une tension **V34** à ses bornes qui atteint la même valeur absolue qu'à la fin de la période de charge directe qui précède la dite période d'inversion, mais avec une polarité inverse aux bornes de la capacité principale **34.** On note que, pendant cette période d'inversion, et ceci sera vrai pour chaque cycle de commutation, l'intensité du courant **I24** dans l'interrupteur secondaire **24** est accrue de la valeur de l'intensité du courant d'inversion **I34.** En effet le courant d'inversion circule dans un sens tel que, au travers de l'interrupteur secondaire, il s'ajoute au courant **I12** à travers le dispositif **10.**

Le commutateur **36** demeure dans son état isolé pendant une nouvelle durée d'isolation depuis l'instant **te1.3** auquel le commutateur **36** a commuté de nouveau dans son état isolé, jusqu'à un instant **te2.0** auquel le commutateur **36** commute dans son état direct pour débuter un deuxième cycle. L'instant **te2.0** correspond donc à la fin du premier cycle de charge de la capacité principale **34** du résonateur **32.**

Le deuxième cycle de charge commence, comme tous les cycles suivants, par une période dite de charge directe, qui dure jusqu'à un instant **te2.1** auquel le commutateur commute dans son état isolé. Pendant cette période de charge directe du deuxième cycle, on voit à la **Fig. 9** que le courant dans la capacité principale **34** croît jusqu'à une valeur de pic **I34.2** pour cette période de charge directe du deuxième cycle, puis décroît jusqu'à la valeur nulle, selon une demi-alternance. Par rapport au premier cycle, la charge initiale de la capacité principale **34** est supérieure. Pour ce deuxième cycle, on voit que le pic d'intensité **I34.2** du courant de charge directe au travers de la capacité principale **34** est supérieur au pic d'intensité **I34.1** du courant de charge directe au travers de la capacité principale **34** pour le cycle précédent. Pendant cette deuxième période de charge directe, l'intensité du courant **I24** dans l'interrupteur secondaire **24** décroit temporairement jusqu'à une valeur **I24.2** inférieure à celle **I24.1** atteinte lors de la première période de charge directe. Par ailleurs, la charge dans la capacité principale **34,** donc la tension **V34** à ses bornes, atteint une valeur **V34.2** qui est supérieure à la valeur **V34.1** atteinte au premier cycle.

On comprend que, au fur et à mesure des cycles de charge, la tension **V34** aux bornes de la capacité principale **34** augmente, de même que la valeur du pic d'intensité du courant de charge directe au travers de la capacité principale **34** augmente aussi. Par conséquent, l'intensité du courant **I24** dans l'interrupteur secondaire **24** décroit temporairement jusqu'à une valeur qui est, pour chaque cycle, inférieure à la valeur atteinte pour le cycle précédent. C'est ainsi que, comme illustré à la **FIG. 10,** quand arrive un « n »ième cycle, la valeur du pic d'intensité **I34.n** du courant de charge directe au travers de la capacité principale **34** atteint une valeur telle que l'intensité du **I24** dans l'interrupteur secondaire **24** décroit temporairement jusqu'à une valeur nulle, avec une variation de courant juste avant que le courant s'annule dI24/dt suffisamment faible, pour permettre l'extinction de l'arc électrique au travers de l'interrupteur secondaire **24.** Notamment, on voit que, dans l'exemple illustré, la valeur du pic d'intensité **I34.n** du courant de charge directe au travers de la capacité principale **34** atteint une valeur égale, en valeur absolue, à la valeur du courant **I12** à travers le dispositif.

A compter de cette interruption, à l'issue du cycle qui commence à l'instant **te(n).0,** l'intensité du **I24** dans l'interrupteur secondaire **24** devient nulle. Le courant tend alors à augmenter la tension **V34** aux bornes de la capacité principale **34** jusqu'à ce que celle-ci atteigne la valeur de tension de protection du parasurtenseur principal **31** qui le protège. Le courant qui circule au travers du dispositif commence alors à circuler dans le parasurtenseur principal **31** tout en continuant à charger la capacité principale **34.** Cet instant marque le début d'une commutation de courant de la capacité principale **34** vers le parasurtenseur principal **31.** Pour des courants de défaut, la commutation continue jusqu'à ce que le courant atteigne la valeur maximale pour laquelle le dispositif est conçu, la tension aux bornes du parasurtenseur principal **31** peut alors atteindre la valeur de protection. Durant cette période de charge de la capacité principale **34,** la tension à ses bornes **V34** a dépassé la tension nominale du réseau et le dispositif **10** exerce donc une force contre-électromotrice qui fait décroître le courant de défaut le traversant. Avec la décroissance du courant, la tension aux bornes du parasurtenseur principal **31** et du condensateur principal **24** décroissent jusqu'à ce que le courant de défaut s'annule.

On remarque que, dans le dispositif selon l'invention, le commutateur **36** n'est traversé par un courant que de manière transitoire durant une coupure. De plus, il est soumis au maximum à une fraction de la pleine tension du réseau à protéger. La tension maximale aux bornes du commutateur **36** sera d'autant plus faible que le ratio L33 / C34 du résonateur principale **32** sera basse.

Avantageusement, l'énergie mise en oeuvre dans le résonateur **32** pour assurer la coupure dans l'interrupteur secondaire **24** est tirée directement de la ligne qu'il s'agit de protéger. Il n'y a pas besoin d'un circuit de charge additionnel. Il n'est pas non plus nécessaire de prévoir un pré-chargement d'une capacité.

Dans les exemples de **Figs. 4 à 6,** le commutateur **36** peut être formé de thyristors, ce qui est avantageux car un thyristor s'ouvre automatiquement lorsque le courant au travers devient nul. Cela permet de simplifier la commande du dispositif puisque seuls les instants de commutation vers l'état direct ou vers l'état d'inversion nécessitent une commande active. Les instants de commutation vers l'état isolé sont obtenus automatiquement lorsque, du fait du caractère résonant du résonateur **32,** le courant imposé par le résonateur **32** passe par une valeur nulle en fin de demi-alternance. Il n'y a par exemple pas besoin d'un circuit de détection de courant nul.

Avec des thyristors, on peut prévoir que les périodes durant lesquelles le commutateur reste dans son état isolé, entre une période de charge directe et une période d'inversion, ou une entre une période d'inversion et une période de charge directe, durent le temps nécessaire à la dé-ionisation du thyristor qui était passant dans la période juste précédente.

En revanche, il n'y a pas besoin d'un contrôle précis de cette durée. Il suffit que les durées de demi-cycle, d'une part entre l'instant de commutation **te1.0,..., te(n).0,** vers l'état de charge direct et l'instant de commutation **te1.2,..., te(n).2** vers l'état d'inversion suivant immédiatement, et d'autre part entre l'instant de commutation vers l'état d'inversion **te1.2,..., te(n).2** et l'instant de commutation **te1.0,..., te(n).0,** vers l'état de charge direct suivant immédiatement, soient supérieures à la durée de la demi-alternance ajoutée au temps nécessaire à la dé-ionisation du thyristor qui était passant dans la période juste précédente. La durée de la demi-alternance dépend directement de la fréquence propre de résonance du résonateur principal **32,** mais elle peut dériver au cours du temps, par exemple suite au vieillissement des composants. De même, le temps nécessaire à la dé-ionisation du thyristor peut dériver au cours du temps, par exemple suite au vieillissement des composants. Il est possible, en prévoyant des durées de demi-cycles supérieures d'une certaine marge par rapport à la somme de ces deux durées, de déterminer une durée de demi-cycle constante, et qui n'a pas besoin d'être strictement définie par rapport à ces valeurs. Cependant, il y a intérêt à que ce que la ou les durées de demi-cycles soit courtes, pour obtenir l'interruption du courant au travers de l'interrupteur secondaire **24** dans le laps de temps le plus court possible. En ce sens, on prévoira de commuter répétitivement le commutateur **36** entre ses états direct et inverseur, en passant à chaque alternance par l'état isolé, à une fréquence de cycles de commutation adaptée à la fréquence propre de résonance du résonateur **32,** sans que la fréquence de cycles de commutation soit nécessairement exactement définie par la fréquence de résonance du résonateur **32.** De manière générale, la fréquence de cycles de commutation sera supérieure à la fréquence propre de résonance du résonateur **32,** par exemple comprise entre 110% et 200 % de la valeur de la fréquence propre de résonance du résonateur **32.**

Le mode de réalisation de la **Fig. 5** reprend tous les composants de celui de la **Fig. 4.** Il comprend en plus des impédances saturables pour faciliter l'interruption du courant. On a ainsi représenté une impédance saturable **118** agencée électriquement en série avec l'interrupteur primaire **18** entre le point primaire **12** et le point intermédiaire **13,** une impédance saturable **124** agencée électriquement en série avec l'interrupteur secondaire **24** entre le point intermédiaire **13** et le point secondaire **14,** et une impédance saturable **136** agencée électriquement entre la borne de sortie **363** du commutateur **36** et la première borne **32a** du résonateur **32.** Le dispositif pourrait comporter une seule ou deux de ces trois impédances saturables, et/ou en comporter d'autres.

Le mode de réalisation de la **Fig. 6** reprend tous les composants de celui de la **Fig. 5.** Il comprend en plus, en parallèle de l'interrupteur d'oscillation principal **36,** un dispositif de filtrage qui permet de limiter les pics de tension et / ou de courant lors des commutations de l'interrupteur d'oscillation principal **36.** Dans l'exemple, ce dispositif de filtrage est constitué d'au moins un, de préférence deux « snubbers » **52.** Dans l'exemple illustré, un « snubber » **52** est réalisé sous la forme d'une filtre RC série, composé d'une résistance et d'une capacité en série. Dans l'exemple illustré à la **Fig. 6,** dans lequel que le commutateur formant l'interrupteur d'oscillation principal **36** comporte un interrupteur **36D** direct et un interrupteur **36V** inverseur, un « snubber » **52** est placé électriquement en parallèle de l'interrupteur **36D** direct, et un « snubber » **52** est placé électriquement en parallèle de l'interrupteur **36V** inverseur.

La **Fig. 7** illustre un mode de réalisation dans lequel l'organe primaire de diversion est un limiteur de courant **180**. Par rapport aux modes de réalisation décrits plus haut, le limiteur de courant est donc substitué en lieu et place de l'interrupteur primaire, entre le point primaire **12** et le point intermédiaire **13**. Comme on le comprendra de ce qui suit, un tel mode de réalisation permet de se passer du circuit d'oscillation auxiliaire décrit plus haut. En revanche, pour le reste, le dispositif de coupure de la **Fig. 7** reprend l'ensemble des éléments qui ont été décrits en relation avec les modes de réalisation des **Figs. 1** à **6,** y compris la possibilité, optionnelle, de reprendre des éléments optionnels / alternatifs des modes de réalisation des **Figs. 1** à **6.**

Le limiteur de courant **180** peut avantageusement comprendre un limiteur de courant, de préférence du type supraconducteur SCFCL (SuperConducting Fault Current Limiter). Dans ce cas, il peut comprendre une résistance supraconductrice traversée par le courant circulant dans la ligne principale **16** entre le point primaire **12** et le point intermédiaire **13**. Un limiteur de courant **180** du type supraconducteur SCFCL comprend par exemple un câble ou ruban autre élément en matériau supraconducteur, par exemple sous la forme d'un enroulement, traversé par le courant entre les bornes **20** et **22**. L'élément en matériau supraconducteur est par exemple baigné dans un bain d'azote liquide afin de le maintenir en dessous de sa température critique tant que l'intensité du courant le traversant est inférieure à la valeur d'activation. Le limiteur de courant **180** peut comporter une composante inductive, mais, dans l'application envisagée, on préfèrera que cette composante inductive soit nulle ou la plus faible possible.

De manière connue, un limiteur de courant présente une résistance électrique nulle, ou pouvant être considérée comme nulle, tant que l'intensité du courant le traversant est inférieure à une valeur d'activation qui est constituée par une intensité de seuil le traversant. Typiquement, cette résistance électrique est rigoureusement nulle en courant continu stable, à l'exception de la résistance, pouvant être considérée comme nulle, des parties non supraconductrices comme les imperfections, les joints et les soudures. Dans ces conditions, la différence de potentiel aux bornes du limiteur de courant **180** est nulle ou peut être considérée comme nulle. L'interrupteur de courant est alors dans un état dit passant et il est alors comparable à un interrupteur dans un état fermé. Dans cet état, on peut considérer que l'intégralité du courant au travers du dispositif **10** passe au travers du limiteur de courant **180.**

Lorsque la valeur d'intensité du courant au travers du limiteur de courant dépasse la valeur d'activation du limiteur, ici appelée intensité de seuil, la résistance électrique du limiteur de courant augmente brutalement, ce qui tend à limiter l'intensité du courant pouvant traverser le limiteur de courant et à générer une tension aux bornes du limiteur de courant **180**. La valeur de résistance électrique du limiteur de courant **180** dans son état de diversion peut être d'au moins 50 Ohm, voire d'au moins 100 Ohm, voire d'au moins 200 Ohm, voire d'au moins 500 Ohm. Le limiteur de courant **180** est alors, par rapport au dispositif de coupure **10** dans lequel il est intégré, dans un état de diversion. En effet, du fait de la résistance qu'il oppose au passage du courant, une partie du courant sera alors déviée vers le parasurtenseur primaire **30.**

On peut prévoir que le limiteur de courant bascule de son état passant à son état de diversion de manière passive. On prévoira dans ce cas que l'intensité de seuil du limiteur de courant **180** soit calibrée pour correspondre à l'intensité à partir de laquelle on souhaite que le dispositif de coupure **10** entre en action.

On peut prévoir que le limiteur de courant bascule de son état passant à son état de diversion de manière active. En effet, avec certains limiteurs de courant, il est possible d'influer sur la valeur de l'intensité de seuil. Par exemple, dans le cas d'un limiteur de courant **180** du type supraconducteur SCFCL, il est possible de faire varier la valeur de l'intensité de seuil en modifiant la température à laquelle est maintenue le matériau supraconducteur. Il est aussi possible de faire varier la valeur de l'intensité de seuil en appliquant un champ magnétique au matériau supraconducteur. Dans ce cas, il est possible de commander le basculement du limiteur de courant de son état passant à son état de diversion.

On notera par ailleurs que l'organe primaire de diversion peut comprendre, électriquement en série dans la ligne principale **16** entre le point primaire **12** et le point intermédiaire **13,** un limiteur de courant **180** et un interrupteur, notamment un interrupteur mécanique.

Afin de permettre la coupure pour des faibles courants, des systèmes additionnels (non représentés) peuvent être employés pour forcer la transition du limiteur de courant alors que le courant le traversant est inférieur à l'intensité de seuil. Ces systèmes sont connus de l'homme de l'art. Un exemple est donné dans le document EP0384346. D'autres méthodes sont possibles, qui prévoient par exemple, sur commande, d'injecter un courant supplémentaire dans le limiteur de courant.

On notera que le dispositif de coupure **10** selon l'invention peut être associé, dans l'installation électrique, électriquement en série avec un autre dispositif de coupure, par exemple de type sectionneur, apte à interrompre complètement et de manière fiable un courant résiduel dans la ligne. L'ordre de grandeur du courant résiduel peut en effet être de l'ordre de 10 Ampère. Cet autre dispositif de coupure pourra être dimensionné pour optimiser son pouvoir d'isolation, sans devoir optimiser sa capacité d'interruption du courant puisque cette fonction sera prioritairement assurée par le dispositif de coupure selon l'invention.

On note par ailleurs que le dispositif de coupure selon l'invention est un dispositif bidirectionnel, apte à interrompre un courant circulant au travers du dispositif quel que soit son sens de circulation, donc dans les deux sens au travers du dispositif. De ce fait, un tel dispositif de coupure pourra être mis en oeuvre dans une installation comportant un réseau maillé, dans une ligne dans laquelle le courant continu peut circuler, suivant la configuration du réseau à un moment donné, dans un sens ou dans un autre.

Un dispositif selon l'invention permet donc d'assurer une ouverture électrique rapide et certaine, pour arrêter la circulation d'un courant de défaut de haute intensité (notamment plus de 10 kA), sous une haute tension, notamment sous une « haute tension B », notamment supérieure à 100 kV. Cependant, une fois le dispositif ouvert, il est nécessaire de pouvoir refermer électriquement le dispositif de coupure **10** pour permettre le rétablissement du courant si on pense avoir résolu l'origine du défaut. Dans ce cas on pilote, par exemple par une unité de commande électronique, le dispositif **10** de manière à fermer mécaniquement l'interrupteur secondaire **24** et, le cas échéant pour les modes de réalisation en comportant un, l'interrupteur primaire **18,** de préférence successivement et dans cet ordre, donc en fermant mécaniquement l'interrupteur secondaire **24** avant l'interrupteur primaire **18.**

Dès la fermeture de l'interrupteur secondaire **24,** on peut déterminer un ou plusieurs paramètres du courant au travers du dispositif de coupure **10** et / ou de la tension phase-terre, ou dans l'installation, notamment pour vérifier que le défaut a bien été éliminé. Cette détermination peut être réalisée par des capteurs placés dans l'installation ou dans le dispositif **10,** lesquels peuvent être reliés à une unité électronique de commande du dispositif **10.** Cependant, il se peut que le défaut n'ait pas été éliminé. Ainsi, en fonction des paramètres détectés pour le courant au travers du dispositif et / ou la tension phase-terre, on peut provoquer une réouverture immédiate du dispositif sans attendre la refermeture de l'interrupteur primaire **18** qui constituerait une refermeture complète du dispositif **10.**

On a vu plus haut que, pour assurer la coupure électrique effective dans l'interrupteur primaire **18,** on pouvait utiliser différents circuits d'oscillation auxiliaire **40.** Pour ce faire, il est proposé de mettre en oeuvre un circuit d'oscillation auxiliaire **40** tel qu'illustré aux **Figures 1** à **5,** et tel que décrit plus haut. En effet, grâce à un tel dispositif, il est possible d'insérer, au choix, de manière pilotable, et éventuellement temporairement, la résistance d'amortissement **48** dans la boucle d'oscillation formée par le circuit d'oscillation auxiliaire **40** et la partie de ligne principale **16** qui inclue l'interrupteur primaire **18.** Ainsi, sans changer la capacité d'oscillation auxiliaire **44,** ni son niveau de chargement initial, et sans changer l'inductance auxiliaire **42,** il devient possible, à moindre frais, de modifier le courant d'oscillation auxiliaire qui est injecté dans la boucle d'oscillation auxiliaire par le circuit d'oscillation auxiliaire **40.** La présence de l'interrupteur de by-pass **50** permet, instantanément, de transformer le circuit d'oscillation auxiliaire **40** d'un circuit RLC en série en un circuit LC en série, ou inversement. Dans d'autres modes de réalisation, la présence de l'interrupteur de by-pass **50** associé à une résistance d'amortissement **48** permet, instantanément, de transformer le circuit d'oscillation auxiliaire **40** d'un circuit RLC en série en un autre circuit RLC en série avec une valeur totale de résistance électrique différente.

Ainsi, en fonction du courant de défaut qui circule dans la ligne principale **16,** il est possible, en vue assurer la coupure électrique effective dans l'interrupteur primaire **18,** d'injecter dans la boucle d'oscillation, un courant d'oscillation résultant soit de la décharge d'un circuit RLC en série, soit de la décharge d'un circuit LC en série, soit de la décharge d'un autre circuit RLC en série avec une valeur totale de résistance électrique différente.

De la sorte, on peut prévoir un procédé de pilotage d'un dispositif de coupure **10** comportant un circuit d'oscillation auxiliaire **40** tel qu'illustré aux **Figs. 1** à **5,** comportant, à un instant donné, la détermination d'au moins un paramètre d'un courant à couper au travers du dispositif, par exemple la détermination d'une valeur d'intensité de ce courant. Cette détermination peut être directe, par exemple par la présence d'un capteur d'intensité de courant dans la partie de ligne principale **16** qui inclut l'interrupteur primaire **18.** Cette détermination peut être indirecte, par exemple par analyse d'autres paramètres du dispositif de coupure ou de l'installation. Cette détermination peut combiner à la fois une détermination directe et une détermination indirecte. Cette détermination peut être faite avant le début du processus d'ouverture du dispositif de coupure, notamment avant toute ouverture mécanique de l'interrupteur primaire **18.** Cette détermination peut être faite après le début du processus d'ouverture du dispositif de coupure, notamment après l'ouverture mécanique de l'interrupteur primaire **18.** Bien entendu, il est aussi possible de prendre en compte, pour cette détermination, des paramètres déterminés avant et après le début du processus d'ouverture du dispositif de coupure **10.**

Sur la base de cette détermination, par exemple en fonction de la valeur déterminée d'intensité de courant de défaut, le procédé de pilotage peut déterminer l'état dans lequel l'interrupteur de by-pass **50** doit être basculé.

Dans un exemple, on considère que le circuit d'oscillation **40** est activé par la fermeture de l'enclencheur d'oscillation **46** à un instant primaire. A cet instant, et dans les instants qui suivent immédiatement, le courant I**50** au travers de l'interrupteur de by-pass **50** reste à zéro, ce qui témoigne de l'état ouvert de l'interrupteur de by-pass **50,** jusqu'à un instant secondaire. Ainsi, entre ces deux instants, la résistance d'amortissement **48** se trouve effectivement insérée dans le circuit d'oscillation auxiliaire **40,** lequel est alors un circuit RLC série. Ainsi, le début de la décharge de la capacité d'oscillation **44** correspond à la décharge d'un circuit RLC en série. A partir de l'instant secondaire, l'interrupteur de by-pass **50** est basculé dans son état fermé, de manière à court-circuiter la résistance d'amortissement **48.** Ainsi, la suite de la décharge de la capacité d'oscillation **44** correspond à la décharge d'un circuit LC en série.

Bien entendu, il est possible de déterminer la durée d'un l'intervalle de temps entre les instants primaire et secondaire, intervalle de temps pendant lequel la résistance d'amortissement **48** est effectivement insérée dans le circuit d'oscillation auxiliaire **40**. Cette durée peut être prédéterminée, ou elle peut être déterminée en fonction de certains paramètres du courant électrique dans le dispositif, notamment en fonction de paramètres du courant de défaut au travers de l'interrupteur primaire **18**.

Ainsi, le dispositif de coupure **10** comportant un circuit d'oscillation **40** peut être piloté, par exemple par une unité électronique de commande, de telle sorte que, au moment de la fermeture de l'interrupteur enclencheur **46,** la résistance d'amortissement **48** soit insérée dans le circuit d'oscillation auxiliaire **40,** ou qu'elle soit au contraire court-circuitée par rapport à ce circuit. Lorsque la résistance d'amortissement **48** est insérée dans le circuit d'oscillation auxiliaire **40,** elle permet notamment de limiter la vitesse de variation de l'intensité d(I18)/dt du courant généré par le circuit d'oscillation auxiliaire **40** dans l'interrupteur primaire **18** au début de la décharge de la capacité d'oscillation **44**. Dans les cas où la résistance d'amortissement **48** est insérée effectivement dans le circuit d'oscillation au moment de la fermeture de l'interrupteur enclencheur **46,** on peut choisir qu'elle soit court-circuitée après un certain intervalle de temps, y compris avant que la coupure électrique ne soit effective dans l'interrupteur primaire **18**, ou au contraire choisir de la maintenir insérée dans le circuit d'oscillation pendant toute la durée d'activation du circuit d'oscillation auxiliaire **40**.

Pour un dispositif tel qu'illustré sur la **Figure 1,** on a déterminé une relation optimale entre les paramètres caractéristiques du circuit d'oscillation

$$d1t = \ln\left(\frac{V44i^2 * C44}{Idef^2 * L42 + \left(\frac{dI18}{dt}\right)max^2 * L42^2 * C44}\right) * \frac{L42}{R48}$$

[Math. 1]

avec

- **d1t:** Intervalle du temps pendant lequel la résistance d'amortissement **48** est effectivement insérée dans le circuit d'oscillation auxiliaire **40** ;
- (dI18/dt)max : valeur maximum de dI18ldt au passage à zéro du courant dans l'interrupteur primaire **18** pour laquelle l'interrupteur primaire **18** peux, à lui seul assurer une coupure électrique ;
- V44i : Tension initiale aux bornes de la capacité **44** du circuit d'oscillation ;
- Idef : Amplitude de courant à couper au travers du dispositif **10** ;
- R48 : valeur de résistance électrique de la résistance d'amortissement **48** ;
- C44 : valeur de capacité de la capacité **44** du circuit d'oscillation auxiliaire **40** ;
- L42 : Valeur d'inductance de l'inductance **42** du circuit d'oscillation auxiliaire **40**.

Dans tous les cas, on s'aperçoit que la valeur de résistance électrique de la résistance d'amortissement **48** n'a pas besoin d'être importante. Donc le ou les composants formant la ou les résistances d'amortissement peuvent être compacts et peu onéreux. De plus, grâce à cette faible valeur de résistance, la valeur de tension imposée à l'interrupteur de by-pass **50** associé à la résistance est elle aussi relativement faible, Donc le ou les composants formant le ou les interrupteurs de by-pass **50** peuvent être compacts et peu onéreux.

Dans un dispositif **10** selon l'invention, les différents éléments qui sont susceptibles d'être commandés, tels que par exemple les interrupteurs primaire **18**, secondaire **24,** l'interrupteur d'oscillation principal **36,** et /ou le limiteur de courant **180** sont par exemple commandés par une unité électronique de commande. Le dispositif **10** selon peut ainsi comporter ou être associé à une ou plusieurs unités électroniques de commande. Une unité électronique de commande comprend typiquement au moins un processeur et au moins une mémoire électronique, et peut comprendre ou être reliée à un ou plusieurs circuits électroniques de communication, par exemple de communication avec un ou plusieurs réseaux informatiques, et / ou un ou plusieurs circuits électroniques d'interface, et /ou un ou plusieurs circuits électroniques d'entrée / de sortie. Une unité électronique de commande peut comprendre ou être associée à un ou plusieurs afficheurs. Une unité électronique de commande peut comprendre ou être associé à un ou plusieurs capteurs, par exemple un ou plusieurs capteur d'intensité et / ou un ou plusieurs capteurs de tension, configurés pour mesure une valeur d'un paramètre physique dans le dispositif de coupure **10** ou dans l'installation électrique dans laquelle le dispositif **10** est destiné à être intégré. La ou les unités électroniques de commande est / sont programmées pour mettre en oeuvre tout ou partie d'un procédé d'ouverture du dispositif tel que décrit ci-dessus.

**Revendications**

**1.** Dispositif de coupure de courant pour courant continu haute tension, du type comportant :

- une ligne principale (**16**) entre un point primaire (**12**) et un point secondaire (**14**), avec un point intermédiaire (**13**) dans la ligne principale entre le point primaire (**12**) et le point secondaire (**14**) ;

- un organe primaire de diversion (**18, 180**) interposé dans la ligne principale entre le point primaire et le point intermédiaire (**13**), l'organe de diversion présentant au moins un état passant, dans lequel il conduit un courant électrique entre le point primaire et le point intermédiaire, et au moins un état de diversion, dans lequel il s'oppose au moins en partie à un passage d'un courant électrique entre le point primaire et le point intermédiaire ;

- un parasurtenseur primaire (**30**) agencé électriquement en parallèle de l'organe primaire de diversion (**18, 180**), entre le point primaire et le point intermédiaire ;

- un interrupteur secondaire (**24**), mécanique, interposé dans la ligne principale entre le point intermédiaire (**13**) et le point secondaire (**14**), l'interrupteur secondaire (**24**) présentant un état ouvert et un état fermé ;

- un résonateur principal (**32**) comportant au moins une inductance principale (**33**) et une capacité principale (**34**) électriquement en série entre une première borne (**32a**) et une seconde borne (**32b**) du résonateur principal (**32**), la seconde borne (**32b**) étant reliée électriquement au point secondaire (**14**) de la ligne principale (**16**) ;

- un interrupteur d'oscillation principal ;

- un parasurtenseur principal (**31**), agencé électriquement en parallèle au moins de la capacité principale (**34**) du résonateur principal (**32**) ;

**caractérisé en ce que** l'interrupteur d'oscillation principal comporte un commutateur (**36**) à trois bornes comprenant :

- une borne directe (**361**) reliée électriquement au point primaire (**12**) de la ligne principale ;
- une borne d'inversion (**362**) reliée électriquement au point intermédiaire (**13**) de la ligne principale ;
- une borne de sortie (**363**) reliée électriquement à la première borne (**32a**) du résonateur principal (**32**) ;

et pouvant commuter au moins entre les trois états suivants :

- un état direct dans lequel la borne de sortie (**363**) est reliée uniquement à la borne directe (**361**) ;
- un état d'inversion dans lequel la borne de sortie (**363**) est reliée uniquement à la borne d'inversion (**362**) ; et
- un état isolé dans lequel la borne de sortie (**363**) est isolée électriquement de la borne directe (**361**) et de la borne d'inversion (**362**).

2. Dispositif de coupure selon la revendication **1, caractérisé en ce que** le commutateur (**36**) est bidirectionnel.

3. Dispositif de coupure selon l'une des revendications **1** ou **2, caractérisé en ce que** le commutateur (**36**) est un commutateur électronique à semi-conducteurs.

4. Dispositif de coupure selon l'une des revendications **1** à **3, caractérisé en ce que** le commutateur (**36**) comporte un interrupteur direct (**36**D) entre la borne directe (**361**) et la borne de sortie (**363**) et un interrupteur inverseur (**36V**) entre la borne d'inversion (**362**) et la borne de sortie (**363**), avec au plus un seul des deux interrupteurs direct (**36D**) et inverseur (**36V**) qui est dans un état fermé à un instant donné.

5. Dispositif de coupure selon la revendication **4, caractérisé en ce que** l'interrupteur direct (**36D**) et l'interrupteur inverseur (**36V**) sont des interrupteurs bidirectionnels.

6. Dispositif de coupure selon l'une des revendications **4** à **5, caractérisé en ce que** chacun de l'interrupteur direct (**36D**) et / ou l'interrupteur inverseur (**36V**) comporte deux thyristors (**36Da, 36Db, 36Va, 36Vb**) montés tête bêche, chacun dans l'une de deux branches électriquement en parallèle.

7. Dispositif de coupure selon l'une quelconque des revendications précédentes, **caractérisé en ce que** l'organe primaire de diversion est un interrupteur, dit interrupteur primaire (**18**), l'état passant correspondant à un état fermé de l'interrupteur primaire (**18**) et l'état de diversion correspondant à un état ouvert de l'interrupteur primaire (**18**).

8. Dispositif de coupure selon la revendication **7, caractérisé en ce qu'**il comporte un circuit d'oscillation auxiliaire (**40**) agencé électriquement en parallèle de l'interrupteur primaire (**18**) entre le point primaire (**12**) et le point intermédiaire (**13**), le circuit d'oscillation auxiliaire (**40**) comportant au moins une inductance auxiliaire (**42**), une capacité auxiliaire (**44**) et un enclencheur d'oscillation auxiliaire (**46**) électriquement en série.

9. Dispositif de coupure selon l'une quelconque des revendications **1** à **6, caractérisé en ce que** l'organe primaire de diversion est ou comprend un limiteur de courant (**180**).

**10.** Dispositif de coupure selon la revendication **9, caractérisé en ce que** le limiteur de courant **(180)** est du type résistance supraconductrice.

**11.** Dispositif de coupure selon l'une quelconque des revendications précédentes, **caractérisé en ce qu'**il comporte un parasurtenseur de protection **(37)** agencé électriquement entre le point primaire **(12)** et la première borne **(32a)** du résonateur principal **(32)** ou entre le point intermédiaire **(13)** et la première borne **(32a)** du résonateur principal **(32).**

**12.** Procédé de pilotage d'un dispositif de coupure selon l'une quelconque des revendications précédentes, **caractérisé en ce qu'**il comporte les étapes :

- de basculement de l'organe primaire de diversion dans son état de diversion ;
- d'ouvrir mécaniquement l'interrupteur secondaire **(24)** ;
- de commuter répétitivement le commutateur **(36)** à trois bornes entre ses états direct et inverseur, en passant à chaque alternance par l'état isolé.

**13.** Procédé de pilotage d'un dispositif de coupure selon la revendication **12, caractérisé en ce que** le commutateur **(36)** est commuté à une fréquence de cycles de commutation adaptée à une fréquence de résonance du résonateur principal.

**14.** Procédé de pilotage d'un dispositif de coupure selon la revendication **13, caractérisé en ce qu'**on arrête de commuter le commutateur à trois bornes dès que le courant **(I24)** dans l'interrupteur secondaire est nul ou que la tension aux bornes du parasurtenseur primaire **(30)** est nulle.

**15.** Procédé de pilotage d'un dispositif de coupure selon l'une des revendications **12 à 14, caractérisé en ce qu'**il comporte l'étape de couper le courant dans l'organe primaire de diversion réalisé sous la forme d'un interrupteur primaire **(18)** mécanique, après son ouverture mécanique, pour provoquer l'apparition, aux bornes du parasurtenseur primaire, d'une tension supérieure à la tension de transition du parasurtenseur primaire.

**Patentansprüche**

**1.** Stromabschaltungsvorrichtung für Hochspannungsgleichstrom des Typs, der aufweist:

- eine Hauptleitung (16) zwischen einem Primärpunkt (12) und einem Sekundärpunkt (14) mit einem Vermittlungspunkt (13) in der Hauptleitung zwischen dem Primärpunkt (12) und dem Sekundärpunkt (14);
- ein primäres Ablenkungsorgan (18, 180), das in der Hauptleitung zwischen dem Primärpunkt und dem Vermittlungspunkt (13) angeordnet ist, wobei das Ablenkungsorgan mindestens einen durchleitenden Zustand aufweist, in dem es einen elektrischen Strom zwischen dem Primärpunkt und dem Vermittlungspunkt leitet, und mindestens einen Ablenkungszustand, in dem es mindestens teilweise eine Durchleitung eines elektrischen Stroms zwischen dem Primärpunkt und dem Vermittlungspunkt verhindert;
- einen primären Überspannungsschutz (30), der elektrisch parallel zum primären Ablenkungsorgan (18, 180) zwischen dem Primärpunkt und dem Vermittlungspunkt eingerichtet ist;
- einen mechanischen sekundären Schalter (24), der in der Hauptleitung zwischen dem Vermittlungspunkt (13) und dem Sekundärpunkt (14) angeordnet ist, wobei der sekundäre Schalter (24) einen geöffneten Zustand und einen geschlossenen Zustand aufweist;
- einen Hauptresonator (32), der mindestens eine Hauptinduktivität (33) und eine Hauptkapazität (34) elektrisch in Reihe zwischen einem ersten Anschluss (32a) und einem zweiten Anschluss (32b) des Hauptresonators (32) aufweist, wobei der zweite Anschluss (32b) mit dem Sekundärpunkt (14) der Hauptleitung (16) elektrisch verbunden ist;
- einen Hauptoszillationsschalter;
- einen Hauptüberspannungsschutz (31), der mindestens zur Hauptkapazität (34) des Hauptresonators (32) elektrisch parallel eingerichtet ist;
**dadurch gekennzeichnet, dass** der Hauptoszillationsschalter eine Schaltvorrichtung (36) mit drei Anschlüssen aufweist, die umfasst:

- einen direkten Anschluss (361), der mit dem Primärpunkt (12) der Hauptleitung elektrisch verbunden ist;
- einen Umkehranschluss (362), der mit dem Vermittlungspunkt (13) der Hauptleitung elektrisch verbunden ist;

- einen Ausgangsanschluss (363), der mit dem ersten Anschluss (32a) des Hauptresonators (32) elektrisch verbunden ist;

und mindestens zwischen den drei folgenden Zuständen umschalten kann:

- einem direkten Zustand, in dem der Ausgangsanschluss (363) nur mit dem direkten Anschluss (361) verbunden ist;
- einem Umkehrzustand, in dem der Ausgangsanschluss (363) nur mit dem Umkehranschluss (362) verbunden ist; und
- einem isolierten Zustand, in dem der Ausgangsanschluss (363) vom direkten Anschluss (361) und vom Umkehranschluss (362) elektrisch isoliert ist.

2. Abschaltungsvorrichtung nach Anspruch 1, **dadurch gekennzeichnet, dass** die Schaltvorrichtung (36) bidirektional ist.

3. Abschaltungsvorrichtung nach einem der Ansprüche 1 oder 2, **dadurch gekennzeichnet, dass** die Schaltvorrichtung (36) eine elektronische Halbleiter-Schaltvorrichtung ist.

4. Abschaltungsvorrichtung nach einem der Ansprüche 1 bis 3, **dadurch gekennzeichnet, dass** die Schaltvorrichtung (36) einen direkten Schalter (36D) zwischen dem direkten Anschluss (361) und dem Ausgangsanschluss (363) und einen Umkehrschalter (36V) zwischen dem Umkehranschluss (362) und dem Ausgangsanschluss (363) mit höchstens einem einzigen von den beiden Schaltern, dem direkten (36D) und dem Umkehrschalter (36V), aufweist, der zu einem bestimmten Zeitpunkt in einem geschlossenen Zustand ist.

5. Abschaltungsvorrichtung nach Anspruch 4, **dadurch gekennzeichnet, dass** der direkte Schalter (36D) und der Umkehrschalter (36V) bidirektionale Schalter sind.

6. Abschaltungsvorrichtung nach einem der Ansprüche 4 bis 5, **dadurch gekennzeichnet, dass** jeder von dem direkten Schalter (36D) und/oder dem Umkehrschalter (36V) zwei Thyristoren (36Da, 36Db, 36Va, 36Vb) aufweist, die, jeder in einer von zwei elektrisch parallelen Abzweigungen, antiparallel angebracht sind.

7. Abschaltungsvorrichtung nach einem der vorangehenden Ansprüche, **dadurch gekennzeichnet, dass** das primäre Ablenkungsorgan ein Schalter, bezeichnet als Primärschalter (18) ist, wobei der durchleitende Zustand einem geschlossenen Zustand des Primärschalters (18) entspricht und der Ablenkungszustand einem geöffneten Zustand des Primärschalters (18) entspricht.

8. Abschaltungsvorrichtung nach Anspruch 7, **dadurch gekennzeichnet, dass** sie eine Hilfsoszillationsschaltung (40) aufweist, die elektrisch parallel zum Primärschalter (18) zwischen dem Primärpunkt (12) und dem Vermittlungspunkt (13) eingerichtet ist, wobei die Hilfsoszillationsschaltung (40) mindestens eine Hilfsinduktivität (42), eine Hilfskapazität (44) und einen Hilfsoszillationsauslöser (46) aufweist, die elektrisch in Reihe sind.

9. Abschaltungsvorrichtung nach einem der Ansprüche 1 bis 6, **dadurch gekennzeichnet, dass** das primäre Ablenkungsorgan einen Strombegrenzer (180) umfasst oder ist.

10. Abschaltungsvorrichtung nach Anspruch 9, **dadurch gekennzeichnet, dass** der Strombegrenzer (180) vom Typ supraleitender Widerstand ist.

11. Abschaltungsvorrichtung nach einem der vorangehenden Ansprüche, **dadurch gekennzeichnet, dass** sie einen Schutzüberspannungsschutz (37) aufweist, der zwischen dem Primärpunkt (12) und dem ersten Anschluss (32a) des Hauptresonators (32) oder zwischen dem Vermittlungspunkt (13) und dem ersten Anschluss (32a) des Hauptresonators (32) elektrisch eingerichtet ist.

12. Verfahren zur Steuerung einer Abschaltungsvorrichtung nach einem der vorangehenden Ansprüche, **dadurch gekennzeichnet, dass** es die Schritte aufweist:

- Kippen des primären Ablenkungsorgans in seinen Ablenkungszustand;
- mechanisches Öffnen des sekundären Schalters (24);
- wiederholtes Umschalten der Schaltvorrichtung (36) mit drei Anschlüssen zwischen seinem direkten und Umkehrzustand, wobei jeder Wechsel über den isolierten Zustand erfolgt.

13. Verfahren zur Steuerung einer Abschaltungsvorrichtung nach Anspruch 12, **dadurch gekennzeichnet, dass** die Schaltvorrichtung (36) in einer Umschaltzyklusfrequenz umgeschaltet wird, die an eine Resonanzfrequenz des Hauptresonators angepasst ist.

14. Verfahren zur Steuerung einer Abschaltungsvorrichtung nach Anspruch 13, **dadurch gekennzeichnet, dass** die Umschaltung der Schaltvorrichtung mit drei Anschlüssen gestoppt wird, sobald der Strom (124) im sekundären Schalter null ist oder die Spannung an den Anschlüssen des primären Überspannungsschutzes (30) null ist.

15. Verfahren zur Steuerung einer Abschaltungsvorrichtung nach einem der Ansprüche 12 bis 14, **dadurch gekennzeichnet, dass** es den Schritt des Unterbrechens des Stroms im primären Ablenkungsorgan aufweist, das in Form eines mechanischen Primärschalters (18) nach dessen mechanischer Öffnung realisiert wird, um an den Anschlüssen des primären Überspannungsschutzes das Auftreten einer Spannung zu verursachen, die höher als die Übergangsspannung des primären Überspannungsschutzes ist.


**Claims**

1. A current cut-off device for high-voltage DC current, of the type including:

   - a main line (16) between a primary point (12) and a secondary point (14), with an intermediate point (13) in the main line between the primary point (12) and the secondary point (14);
   - a primary diversion member (18, 180) interposed in the main line between the primary point and the intermediate point (13), the diversion member having at least an on-state, in which it conducts an electric current between the primary point and the intermediate point, and at least a diversion state, in which it opposes at least partly a passage of an electric current between the primary point and the intermediate point;
   - a primary surge protector (30) electrically arranged in parallel with the primary diversion member (18, 180), between the primary point and the intermediate point;
   - a secondary mechanical switch (24) interposed in the main line between the intermediate point (13) and the secondary point (14), the secondary switch (24) having an open state and a closed state;
   - a main resonator (32) including at least a main inductance (33) and a main capacitance (34) electrically in series between a first terminal (32a) and a second terminal (32b) of the main resonator (32), the second terminal (32b) being electrically linked to the secondary point (14) of the main line (16);
   - a main oscillation switch;
   - a main surge protector (31), electrically arranged in parallel at least with the main capacitance (34) of the main resonator (32);

   **characterized in that** the main oscillation switch includes a three-terminal changeover switch (36) comprising:

      - a direct terminal (361) electrically linked to the primary point (12) of the main line;
      - a inverting terminal (362) electrically linked to the intermediate point (13) of the main line;
      - an output terminal (363) electrically linked to the first terminal (32a) of the main resonator (32);

   and able to switch at least between the three following states:

      - a direct state in which the output terminal (363) is only linked to the direct terminal (361);
      - an inverting state in which the output terminal (363) is only linked to the inverting terminal (362); and
      - an isolated state in which the output terminal (363) is electrically isolated from the direct terminal (361) and from the inverting terminal (362).

2. The cut-off device according to claim 1, **characterized in that** the changeover switch (36) is bidirectional.

3. The cut-off device according to any of claims 1 or 2, **characterized in that** the changeover switch (36) is an electronic semiconductor changeover switch.

4. The cut-off device according to any of claims 1 to 3, **characterized in that** the changeover switch (36) includes a direct switch (36D) between the direct terminal (361) and the output terminal (363) and a reversing switch (36V) between the inverting terminal (362) and the output terminal (363), with at most only one of the two direct (36D) and reversing (36V) switches which is in a closed state at a given time.

5. The cut-off device according to claim 4, **characterized in that** the direct switch (36D) and the reversing switch (36V) are bidirectional switches.

6. The cut-off device according to any of claims 4 to 5, **characterized in that** each of the direct switch (36D) and/or of the reversing switch (36V) includes two thyristors (36Da, 36Db, 36Va, 36Vb) mounted head-to-tail, each in one of two branches electrically in parallel.

7. The cut-off device according to any one of the preceding claims, **characterized in that** the primary diversion member is a switch, called primary switch (18), the on-state corresponding to a closed state of the primary switch (18) and the diversion state corresponding to an open state of the primary switch (18).

8. The cut-off device according to claim 7, **characterized in that** it includes an auxiliary oscillation circuit (40) arranged electrically in parallel with the primary switch (18) between the primary point (12) and the intermediate point (13), the auxiliary oscillation circuit (40) including at least an auxiliary inductance (42), an auxiliary capacitance (44) and an auxiliary oscillation trigger (46) electrically in series.

9. The cut-off device according to any one of claims 1 to 6, **characterized in that** the primary diversion member comprises a current limiter (180).

10. The cut-off device according to claim 9, **characterized in that** the current limiter (180) is configured to oppose an electrical resistance to any current passing therethrough whose intensity exceeds a value called threshold intensity.

11. The cut-off device according to any one of the preceding claims, **characterized in that** it includes a surge protector (37) electrically arranged between the primary point (12) and the first terminal (32a) of the main resonator (32) or between the intermediate point (13) and the first terminal (32a) of the main resonator (32).

12. A method for piloting a cut-off device according to any one of the preceding claims, **characterized in that** it includes the steps of:

   - switching the primary diversion member to its diversion state;
   - mechanically opening the secondary switch (24);
   - repeatedly switching the three-terminal changeover switch (36) between its direct and inverting states, by passing at each alternation through the isolated state.

13. The method for piloting a cut-off device according to claim 12, **characterized in that** the changeover switch (36) is switched at a frequency of changeover cycles adapted to a resonant frequency of the main resonator.

14. The method for piloting a cut-off device according to claim 23, **characterized in that** the switching of the three-terminal changeover switch is stopped as soon as the current (124) in the secondary switch is zero or the voltage across the primary surge protector (30) is zero.

15. The method for piloting a cut-off device according to any of claims 12 to 14, **characterized in that** it includes the step of cutting off the current in the primary diversion member designed as a mechanical primary switch (18), after its mechanical opening, to cause the appearance, across the primary surge protector, of a voltage greater than the transition voltage of the primary surge protector.

[Fig. 1]

[Fig. 2]

[Fig. 3]

[Fig. 4]

[Fig. 5]

[Fig. 6]

[Fig. 7]

[Fig. 8]

[Fig. 9]

[Fig. 10]

te(n-2).0    te(n-2).3    te(n-1).0    te(n-1).3    te(n).0 = tf

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- DE 102011083514
- WO 2015078525 A
- WO 2015166600 A
- US 20170178844 A
- DE 2136865
- WO 2015185096 A
- US 4442469 A
- US 3758790 A

- WO 2013092873 A
- EP 3321948 A
- EP 3306635 A
- EP 3161846 A
- WO 2017116296 A
- EP 3059827 A
- EP 0660352 A
- EP 0384346 A

**Littérature non-brevet citée dans la description**

- **ZICHI ZHANG et al.** A novel low voltage hybridDCswitch using resonant current injection. *International Conférence on Components and Systems for DC Grids,* Mars 2017

- **MEHANATHAN PATHMANATHAN et al.** Self-powered supply and control system for hybrid semiconductor DC switch. *EPE'18 ECCE Europe,* ISBN 9789075815290